# EUROPÄISCHE PATENTSCHRIFT

(11) **EP 1 851 098 B1**
(45) Veröffentlichungstag und Bekanntmachung des Hinweises auf die Patenterteilung: **28.04.2010**
(21) Anmeldenummer: 05806108.6
(22) Anmeldetag: 11.11.2005
(51) Int. Cl.: B60T 17/08

(54) **KOMBINIERTER FEDERSPEICHER- UND BETRIEBSBREMSZYLINDER MIT EINER BEATMUNGSEINRICHTUNG**
COMBINED SPRING ACCUMULATOR AND SERVICE BRAKE CYLINDER WITH BREATHER DEVICE
CYLINDRE DE FREIN A ACCUMULATEUR A RESSORT ET DE SERVICE COMBINE AVEC DISPOSITIF DE RESPIRATION

(30) Priorität: 09.02.2005 DE 102005005722
(43) Veröffentlichungstag der Anmeldung: 07.11.2007
(73) Patentinhaber: WABCO GmbH, 30453 Hannover (DE)
(72) Erfinder: BRANDT, Oliver, 31120 Braunschweig (DE); MATTHIAS, Wilfried, 31542 Bad Nenndorf (DE); RICHTER, Andreas, 30900 Wedemark (DE)
(74) Vertreter: Günther, Constantin
(86) Internationale Anmeldenummer: PCT/EP2005/012128
(87) Internationale Veröffentlichungsnummer: WO 2006/084492

(56) Entgegenhaltungen:
- EP-A- 0 490 841
- DE-A1- 2 308 838
- DE-A1- 10 228 934

## Beschreibung

Die Erfindung betrifft einen kombinierten Federspeicher- und Betriebsbremszylinder mit einer Beatmungseinrichtung nach dem Oberbegriff des Patentanspruchs 1 oder 2

Ein derartiger kombinierter Federspeicher- und Betriebsbremszylinder ist aus der DE 102 28 934 A1 und der EP 0 490 841 A1 bekannt.

Wird der Federspeicherbremszylinder eines kombinierten Federspeicher- und Betriebsbremszylinders durch Druckentlastung seiner Druckmittelkammer betätigt, so vergrößert sich infolge der dann eintretenden Entspannung der Feder und Verschiebung des Kolbens die Federkammer. Um zu verhindern, dass bei dieser Vergrößerung der Federkammer in derselben Unterdruck entsteht, der die Kraftabgabe der Feder behindern würde, wird die Federkammer über eine als Beatmungseinrichtung dienende druckgesteuerte Ventileinrichtung mit der Druckmittelkammer des Betriebsbremszylinders verbunden. ders zugeführte Druckluft in der vorgeschalteten Druckluftbeschaffungs- und Aufbereitungsanlage gereinigt und getrocknet ist, wird durch diese Art der Beatmung die Korrosions- und Verschmutzungsgefahr im Bereich der Federkammer und an der Feder entscheidend herabgesetzt.

Bei dem bekannten Federspeicher - und Betriebsbremszylinder findet ein druckgesteuertes Ventil Anwendung, welches zwei Arbeitsanschlüsse und einen Steueranschluss sowie einen in Richtung der Längsachse des Ventils bewegbaren Ventilkolben aufweist. In Abhängigkeit davon, ob die Druckmittelkammer des Betriebsbremszylinders und/oder die Druckmittelkammer des Federspeicherbremszylinders entlüftet oder mit Druckluft beaufschlagt ist bzw. beaufschlagt sind, und in Abhängigkeit davon, in welcher Stellung der Kolben des Federspeicherbremszylinders sich befindet, sind die beiden Arbeitsanschlüsse des Ventils und somit auch die Federkammer des Federspeicherbremszylinders und die Druckmittelkammer des Betriebsbremszylinders miteinander verbunden oder gegeneinander abgesperrt.

Bei dem druckgesteuerten Ventil des bekannten Federspeicher- und Betriebsbremszylinders sind die beiden Arbeitsanschlüsse und der Steueranschluss quer zur Längsachse des Ventilkolbens verlaufend am Ventil angeordnet. Wenn das druckgesteuerte Ventil sich in seiner Offenstellung befindet, strömt die Luft aus der den höheren Druck aufweisenden Kammer - Federkammer des Federspeicherbremszylinders oder Druckmittelkammer des Betriebsbremszylinders - über den dieser Kammer zugeordneten einen Arbeitsanschluss zu dem jeweils anderen Arbeitsanschluss hin, welcher der den niedrigeren Druck aufweisenden Kammer zugeordnet ist. Dabei wird der Luftstrom im Ventil mehrmals umgelenkt.

Der Erfindung liegt die Aufgabe zugrunde, einen Federspeicher- und Betriebsbremszylinder der eingangs erwähnten Art zu verbessern, insbesondere in Hinblick auf ein günstigeres Strömungsverhalten der Beatmungseinrichtung.

Diese Aufgabe wird mit den in den Patentansprüchen 1 und 2 angegebenen Ausführungen der Erfindung gelöst. Weiterbildungen und vorteilhafte Ausgestaltungen der Erfindung sind in den Unteransprüchen angegeben.

Der erfindungsgemäße Federspeicher- und Betriebsbremszylinder bietet insbesondere den Vorteil, dass der Luftstrom auf seinem Weg von dem einen Arbeitsanschluss zu dem anderen Arbeitsanschluss des Beatmungsventils hin nur einen geringen Widerstand zu überwinden hat und so Staudruckbildung vor oder hinter dem Durchlass des Ventilkolbens vermieden wird.

Bewirkt wird das günstige Strömungsverhalten unter anderem dadurch, dass der Luftstrom von dem jeweils einen Arbeitsanschluss zu dem jeweils anderen Arbeitsanschluss hin nur einmal umgelenkt wird.

Der Durchlassquerschnitt des Beatmungsventils lässt sich auf einfache Art und Weise durch Vergrößern oder Verkleinern des Querschnitts des im oder am Ventilkolben angeordneten Durchlasses verändern.

Von Vorteil ist es, wenn die Arbeitsanschlüsse sowie der im oder am Ventilkolben angeordneten Durchlass für den Luftstrom wenigstens annähernd gleich große Querschnitte aufweisen.

Vorteilhafterweise lässt sich durch Ändern der einander entgegengerichteten Wirkflächen des Ventilkolbens und durch Verwenden unterschiedlicher Federn für das Ventil die Ansprechempfindlichkeit des Ventils verändern.

Ein weiterer Vorteil des erfindungsgemäßen Federspeicher- und Betriebsbremszylinders ist auch darin zu sehen, dass sie sich einfach und kostengünstig herstellen lässt.

Gemäß einer vorteilhaften Weiterbildung der Erfindung ist das Beatmungsventil der Beatmungseinrichtung das Federspeicher- und Betriebsbremszylinders als vorgesteuertes Ventil ausgebildet, wodurch der Vorteil erzielt wird, dass bei einem Hub des Kolbens des Federspeicherbremszylinders in Bremsbetätigungsrichtung zuerst die Steuerkammer des Beatmungsventils und erst dann ein Arbeitsanschluss des Beatmungsventils mit der Druckmittelkammer des Betriebsbremszylinders verbunden wird. Zu diesem Zweck weist die Beatmungseinrichtung ein zweites Ventil und gegebenenfalls ein drittes Ventil auf, wobei mittels des zweiten Ventils die Druckmittelkammer des Betriebsbremszylinders gegen die Arbeitskammer und mittels des dritten Ventils die Druckmittelkammer des Betriebsbremszylinders gegen die Steuerkammer des als Beatmungsventil dienenden ersten Ventils in Richtung auf die Arbeitskammer bzw. in Richtung auf die Steuerkammer zu absperrbar ist.

Durch die Vorsteuerung des Beatmungsventils wird so auf einfache Art und Weise erreicht, dass bei einem Hub des Kolbens des Federspeicherbremszylinders in Bremsbetätigungsrichtung, bei gleichzeitigem Vorhandensein von Druckmittel in der Druckmittelkammer des Betriebsbremszylinders, das Beatmungsventil bereits dann in seine Schließstellung gebracht wird, wenn die Verbindung zwischen dem Arbeitsanschluss des Beatmungsventils und der Druckmittelkammer des Betriebsbremszylinders noch nicht freigegeben ist.

Vorteilhafterweise ist das Beatmungsventil des kombinierten Federspeicher- und Betriebsbremszylinders so ausgebildet und so an oder in der Kolbenstange des Federspeicherbremszylinders angeordnet, dass das Dichtelement, welches in der Durchgangsöffnung für die Kolbenstange angeordnet ist, zusätzlich zu seiner Abdicht- und Führungsfunktion für die Kolbenstange die Funktion eines Dichtkörpers für das zweite Ventil und gegebenenfalls für das dritte Ventil übernehmen kann.

Durch die Beatmungseinrichtung für die Federkammer des Federspeicherbremszylinders wird zudem ein gutes Ansprechverhalten des Federspeicherbremszylinders erreicht.

Anhand der Zeichnung werden nachfolgend zwei Ausführungsbeispiele der Erfindung näher erläutert.

Es zeigen:
- Fig. 1: einen kombinierten Federspeicher- und Betriebsbremszylinder, mit einer an der Kolbenstange des Kolbens des Federspeicherbremszylinders angeordneten vorgesteuerten Ventileinrichtung zum Verbinden der Federkammer des Federspeicherbremszylinders mit der Druckmittelkammer des Betriebsbremszylinders, wobei die Druckmittelkammer des Federspeicherbremszylinders mit Druckmittel beaufschlagt und die Druckmittelkammer des Betriebsbremszylinders entlüftet ist;
- Fig. 2: einen vergrößerten Ausschnitt des die Ventileinrichtung aufweisenden Bereiches der Kolbenstange des Federspeicherbremszylinders gemäß Fig. 1, wobei das Beatmungsventil sich in seiner Offenstellung und das Absperrventil sowie das Vorsteuerventil sich in ihrer Schließstellung befinden;
- Fig. 2a: einen Schnitt durch die in Fig. 2 gezeigte Ventileinrichtung, wobei der Ventilkolben um 90° um seine Längsachse gedreht ist;
- Fig. 3: den in Fig. 1 gezeigten kombinierten Federspeicher- und Betriebsbremszylinder, wobei die Druckmittelkammer des Federspeicherbremszylinders und die Druckmittelkammer des Betriebsbremszylinders entlüftet sind;
- Fig. 4: einen vergrößerten Ausschnitt des die Ventileinrichtung aufweisenden Bereiches der Kolbenstange des Federspeicherbremszylinders gemäß Fig. 3, wobei das Beatmungsventil, das Absperrventil und das Vorsteuerventil sich in ihrer Offenstellung befinden:
- Fig. 5: den in Fig. 1 gezeigten kombinierten Federspeicher- und Betriebsbremszylinder bei druckbeaufschlagter Druckmittelkammer des Betriebsbremszylinders und druckbeaufschlagter Druckmittelkammer des Federspeicherbremszylinders, wobei in der Druckmittelkammer des Federspeicherbremszylinders die Druckabbauphase eingeleitet ist;
- Fig. 6: einen vergrößerten Ausschnitt des die Ventileinrichtung aufweisenden Bereiches der Kolbenstange des Federspeicherbremszylinders gemäß Fig. 5, wobei das Beatmungsventil vom Druck in der Druckmittelkammer des Betriebsbremszylinders in seine Schließstellung gebracht worden ist;
- Fig. 7: einen vergrößerten Ausschnitt des Bereiches der Kolbenstange des Federspeicherbremszylinders, in welchem das Beatmungsventil angeordnet ist, wobei der Ventilkolben des Beatmungsventils als Fächerkolben ausgebildet ist (nicht zur Erfindung gehörend);
- Fig. 7a: einen Schnitt durch die in Fig. 7 gezeigte Ventileinrichtung, wobei der Ventilkolben um 90° um seine Längsachse gedreht ist (nicht zur Erfindung gehörend), und
- Fig. 8: einen kombinierten Federspeicher- und Betriebsbremszylinder mit Beatmungseinrichtung, wobei der Federspeicherbremszylinder als Doppelmembranzylinder ausgebildet ist.

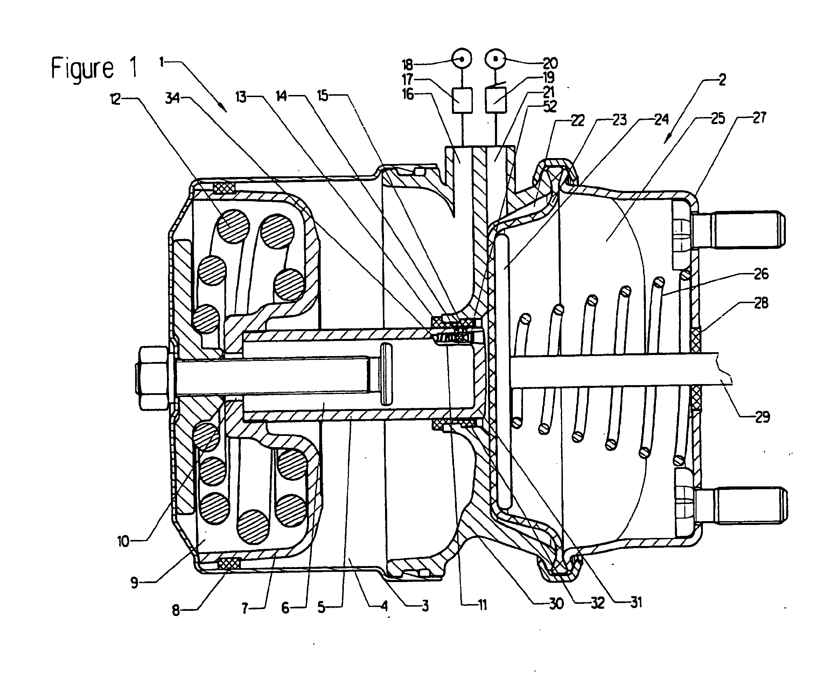

In Fig. 1 ist ein kombinierter Federspeicher- und Betriebsbremszylinder (1, 2) dargestellt, der aus einem Federspeicherbremszylinder (1) und einem Betriebsbremszylinder (2) besteht, die zu einer Baueinheit zusammengefasst sind. Der Federspeicherbremszylinder (1) weist ein Gehäuse (30, 3) auf, welches aus einer für den Federspeicherbremszylinder (1) und den Betriebsbremszylinder (2) gemeinsamen Wand (30) und einem topfförmigen Deckel (3) besteht. Im Gehäuse (30, 3) ist ein als Federspeicherkolben dienender Kolben (7) mittels eines Dichtringes (8) abgedichtet in Richtung der Längsachse des Gehäuses (30, 3) verschiebbar angeordnet. Der Kolben (7) teilt den Federspeicherbremszylinder (1) in eine als Lösekammer dienende Druckmittelkammer (4) und eine Federkammer (9) auf. In der Federkammer (9) ist eine als Speicherfeder dienende Feder (12) angeordnet, die sich mit ihrem einen Ende über einen Federteller am Deckel (3) des Gehäuses (30, 3) abstützt und mit ihrem anderen Ende den Kolben (7) in Richtung auf die Druckmittelkammer (4) zu (Bremsbetätigungsrichtung) beaufschlagt.

An der die Druckmittelkammer (4) begrenzenden Seite des Kolbens (7) ist zentrisch eine von einem Rohr gebildete Kolbenstange (5) angeordnet, die sich durch die Druckmittelkammer (4) und eine in der Wand (30) angeordnete Durchgangsöffnung (32) hindurch in Richtung auf eine als Betriebsbremskammer dienende Druckmittelkammer (22) des Betriebsbremszylinder (2) zu erstreckt. Die Kolbenstange (5) ist an ihrem der Druckmittelkammer (22) des Betriebsbremszylinders (2) zugewandten Ende mittels eines Bodenteiles (31) verschlossen. Die Wand (30) weist einen sich in die Druckmittelkammer (4) des Federspeicherbremszylinders (1) hineinerstreckenden ringförmigen Vorsprung auf, welcher die Durchgangsöffnung (32) für die Kolbenstange (5) des Federspeicherbremszylinders (1) begrenzt.

In der Durchgangsöffnung (32) für die Kolbenstange (5) ist ein ringförmiges Dichtelement (13, 52) angeordnet, welches die Kolbenstange (5) dichtend umschließt und neben seiner Dichtfunktion die Funktion eines Führungselementes für die Kolbenstange (5) hat. Im Kolben (7) ist koaxial zur Kolbenstange (5) eine Durchgangsöffnung (10) für ein manuell betätigbares Federspeicherlöseelement angeordnet. Der Querschnitt für die Durchgangsöffnung (10) ist so gewählt, dass zwischen dem Federspeicherlöseelement und der die Durchgangsöffnung (10) begrenzenden Wand ein Ringspalt verbleibt, über welchen ein als Verbindungskanal (6) dienender Innenraum der rohrförmigen Kolbenstange (5) mit der Federkammer (9) verbunden ist.

Über einen Druckmittelanschluss (16) in der Wand (30) des Gehäuses (30, 3) des Federspeicherbremszylinders (1) und über ein mit diesem verbundenes, z.B. als Handbremsventil (17) ausgebildetes Ventil ist die Druckmittelkammer (4) des Federspeicherbremszylinders wahlweise mit einer Druckluftquelle (18) oder mit der Atmosphäre verbindbar.

An den Federspeicherbremszylinder (1) schließt der Betriebsbremszylinder (2) an, der ein Gehäuse (30, 27) aufweist. Das Gehäuse (30, 27) des Betriebsbremszylinders (2) wird von der für den Federspeicherbremszylinder (1) und den Betriebsbremszylinder (2) gemeinsamen Wand (30) und einem topfförmigen Deckel' (27) gebildet. Ein aus einer Membran (23) und einem Membranteller (24) bestehender, als Betriebsbremskolben dienender Kolben (23, 24) unterteilt den Betriebsbremszylinder (2) in die als Betriebsbremskammer dienende Druckmittelkammer (22) und eine Federkammer (25). Die Membran (23) ist zwischen der Wand (30) und dem Deckel (27) des Gehäuses (30, 27) eingespannt. Der Kolben (23, 24) wird von einer Feder (26), die sich am Deckel (27) abstützt, in Richtung auf die Druckmittelkammer (22) zu (Bremslöserichtung) beaufschlagt. Am Membranteller (24) ist zentrisch eine Kolbenstange (29) angeordnet, die durch eine Durchgangsöffnung im Deckel (27) hindurch aus dem Gehäuse (30, 27) herausgeführt ist. In der Durchgangsöffnung ist ein die Kolbenstange (29) umschließendes Dichtelement (28) angeordnet, welches zusätzlich zu seiner Dichtfunktion die Funktion einer Führung für die Kolbenstange (29) hat. In der Wand (30) des Gehäuses (30, 27) ist ein Druckmittelanschluss (21) angeordnet. Über den Druckmittelanschluss (21) und ein als Betriebsbremsventil (19) ausgebildetes Ventil ist die Druckmittelkammer (22) wahlweise mit einer Druckluftquelle (20) oder mit der Atmosphäre verbindbar.

Die Wand der rohrförmigen Kolbenstange (5) des Federspeicherbremszylinders (1) weist an ihrem freien Ende einen verdickten Bereich (11) auf. In dem verdickten Bereich (11) ist ein als Beatmungsventil dienendes erstes Ventil (39, 44, 49, 50, 40, 34, 14, 15, 37, 47, 48) der Beatmungseinrichtung für die Federkammer (9) des Federspeicherbremszylinders (1) angeordnet.

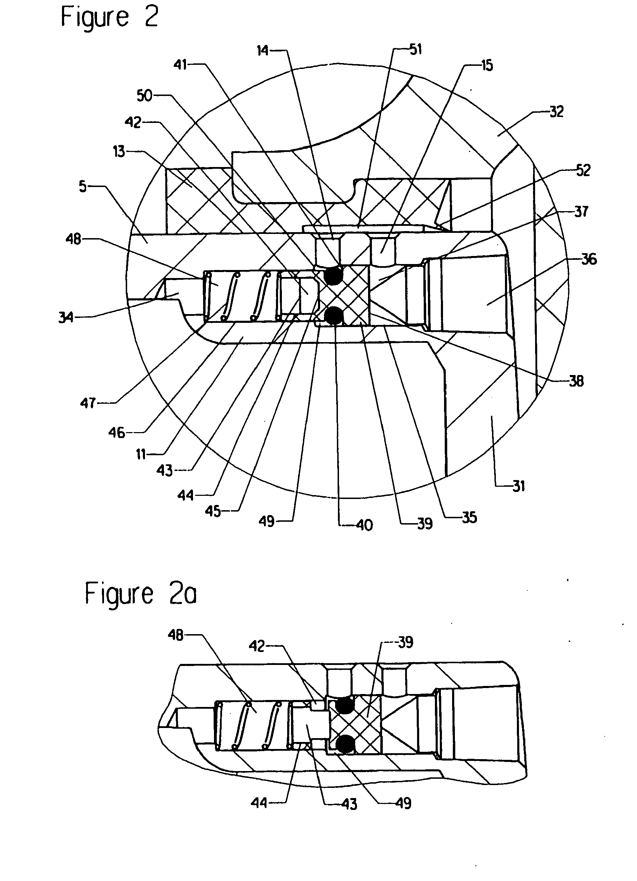

Einige der dem ersten Ventil zugeordneten Bezugszeichen sind erst den Figuren 2 und 2a entnehmbar, da in diesen Figuren das erste Ventil vergrößert dargestellt ist und deshalb die einzelnen Bauteile des ersten Ventils dort besser erkennbar sind.

Die Beatmungseinrichtung wird nachfolgend anhand der Fig.1, der Fig. 2 und der Fig. 2a näher erläutert.

In dem verdickten Bereich (11) der Kolbenstange (5) ist eine mehrfach abgestufte Bohrung (35, 46) angeordnet, die vom Bodenteil (31) der Kolbenstange (5) ausgeht und sich, in Richtung der Längsachse der Kolbenstange (5) verlaufend, in den verdickten Bereich (11) hineinerstreckt und diesen durchdringt, so dass die abgestufte Bohrung (35, 46) mit der zur Federkammer (9) des Federspeicherbremszylinders (1) hin führenden Verbindungsleitung (6) in der Kolbenstange (5) verbunden ist. Die Bohrung (35, 46) ist an ihrem den größten Durchmesser aufweisenden Endbereich mittels eines Verschlussteiles (36) verschlossen. In dem verdickten Bereich (11) der Kolbenstange (5) sind eine als erster Arbeitsanschluss (14) dienende erste Bohrung, ein von einem Teilbereich der abgestuften Bohrung (35, 46) gebildeter zweiter Arbeitsanschluss (34) und eine als Steueranschluss (15) dienende dritte Bohrung angeordnet. Der erste Arbeitsanschluss (14) und der Steueranschluss (15) sind quer zur Längsachse der Bohrung (35, 46) verlaufend im verdickten Teil (11) der Kolbenstange (5) angeordnet, wobei sie von der äußeren Mantelfläche der Kolbenstange (5) ausgehen und in den den größeren Durchmesser aufweisenden Teilbereich (35) der abgestuften Bohrung (35, 46) einmünden. Der zweite Arbeitsanschluss (34) wird von dem im verdickten Teil (11) der Kolbenstange (5) gelegenen, den kleinsten Durchmesser aufweisenden Endbereich der abgestuften Bohrung (35, 46) gebildet, wobei dieser Endbereich der Bohrung (35, 46) in den als Verbindungskanal (6) dienenden Innenraum der Kolbenstange (5) einmündet.

In der abgestuften Bohrung (35, 46) ist ein abgestufter Ventilkolben (39, 44) in Richtung der Längsachse der Bohrung (35, 46) gleitend verschiebbar angeordnet. Der Ventilkolben (39, 44) begrenzt mit seiner dem Verschlussteil (36) zugewandten Stirnseite eine Steuerkammer (37), in welche der Steueranschluss (15) einmündet. Mit seiner dem Verschlussteil (36) abgewandten Stirnseite begrenzt der Ventilkolben (39, 44) einen als Federraum dienenden Raum (48), welcher auf der der Steuerkammer (37) abgewandten Seite des Ventilkolbens (39, 44) gelegen und mit dem zweiten Arbeitsanschluss (34) verbunden ist. Der Raum (48) stellt praktisch einen Teil des zweiten Arbeitsanschlusses (34) dar. Als den Raum (48) begrenzende Stirnseite des Ventilkolbens (39, 44) ist die dem Medium im Raum (48) ausgesetzte Fläche des Ventilkolbens (39, 44) anzusehen. Der Ventilkolben (39, 44) und die Bohrung (35, 46) sind so bemessen und das Material für den Ventilkolben (39, 44) und für das die Bohrung (35, 46) aufweisende Bauteil (Kolbenstange 5) sind so aufeinander abgestimmt, dass der Ventilkolben (39, 44) mit seinem den kleineren Durchmesser aufweisenden Abschnitt (44) an der Wand des den kleineren Durchmesser aufweisenden Teilbereiches (46) der Bohrung (35, 46) und mit seinem den größeren Durchmesser aufweisende Abschnitt (39) an der Wand des den größeren Durchmesser aufweisenden Teilbereiches (35) der Bohrung (35, 46) dichtend anliegt. Das bedeutet, dass für die Abdichtung zwischen der Steuerkammer (37) und einer Arbeitskammer (49) eine zusätzliche Abdichtung mittels eines auf dem Ventilkolben (39, 44) angeordneten Dichtringes nicht unbedingt erforderlich ist. Im Bereich der Stufe des Ventilkolbens (39, 44) ist im Mantel des den kleineren Durchmesser aufweisenden Abschnitts (44) des Ventilkolbens (39, 44) eine umlaufende Nut angeordnet. Die Nut dient als Aufnahme (41) für einen ringförmigen Dichtkörper (40).

Eine dem Dichtkörper (40) gegenüberliegende Stufe der abgestuften Bohrung (35, 46) - Stufe von dem den größeren Durchmesser aufweisenden Teilbereich (35) zu dem den kleineren Durchmesser aufweisenden Teilbereich (46) der abgestuften Bohrung (35, 46) hin - dient als Ventilsitz (50), an welchem der Ventilkolben (39, 44) bei Beaufschlagung der Steuerkammer (37) mit Druckluft mit seinem Dichtkörper (40) zur Anlage gebracht wird. Von dem Ventilsitz (50) und dem den größeren Durchmesser aufweisenden Abschnitt (39) des Ventilkolbens (39, 44) wird die Arbeitskammer (49) begrenzt, in die der erste Arbeitsanschluss (14) einmündet. In dem Raum (48) ist eine als Rückstellkraft für den Ventilkolben (39, 44) dienende Druckfeder (47) angeordnet, die sich mit ihrem einen Ende an einer weiteren Stufe der abgestuften Bohrung (35, 46)
- Stufe von dem den kleineren Durchmesser aufweisenden Teilbereich (46) der abgestuften Bohrung (35, 46) zu dem zweiten Arbeitsanschluss (34) hin - abstützt und mit ihrem anderen Ende den Ventilkolben (39, 44) in Richtung auf das als Anschlag für den Ventilkolben (39, 44) ausgebildete Verschlussteil (36) zu beaufschlagt.

Der Ventilkolben (39, 44) weist eine Ausnehmung (43) auf, die in der Art einer Sackbohrung ausgebildet ist. Die Ausnehmung (43) beginnt an der dem Verschlussteil (36) für die Bohrung (35, 46) abgewandten Stirnseite des Ventilkolbens (39, 44) und erstreckt sich in Richtung der Längsachse des Ventilkolbens (39, 44) verlaufend in diesen hinein. In der die Ausnehmung (43) begrenzenden Wand des den kleineren Durchmesser aufweisenden Abschnitts (44) des Ventilkolbens (39, 44) ist nahe der Aufnahme (41) für den Dichtkörper (40) wenigstens eine fensterartige Durchgangsöffnung (42) angeordnet, die an der äußeren Mantelfläche des Ventilkolbens (39, 44) beginnt und quer zur Längsachse des Ventilkolbens (39, 44) verlaufend in die Ausnehmung (43) des Ventilkolbens (39, 44) (43) einmündet. Die Durchgangsöffnung (42) kann selbstverständlich auch direkt an die Aufnahme (41) für den Dichtkörper (40) angrenzend angeordnet werden. Die Ausnehmung (43) und die Durchgangsöffnung (42) des Ventilkolbens (39, 44) dienen als Durchlass zum Verbinden des ersten Arbeitsanschlusses (14) mit dem Raum (48) und somit mit dem zweiten Arbeitsanschluss (34), wenn das Ventil (50, 40) sich in seiner Offenstellung befindet.

In Fig. 2a sind die Durchgangsöffnung (42) und die mi t dieser verbundene Ausnehmung (43) im Ventilkolben (39, 44) in einer Ansicht dargestellt, gemäß welcher der Ventilkolben (39, 44) um 90° um seine Längsachse gedreht ist.

Der Ventilkolben (39, 44) weist eine erste Wirkfläche (38) und eine der ersten Wirkfläche (38) entgegengerichtete zweite Wirkfläche (45) auf. Die erste Wirkfläche (38) wird von der die Steuerkammer (37) begrenzenden Stirnseite des Ventilkolbens (39, 44) gebildet und die zweite Wirkfläche (45) wird von dem Boden der Ausnehmung (43) im Ventilkolben (39, 44) gebildet. Eine der ersten Wirkfläche (38) entgegengerichtete, vernachlässigbar kleine weitere Wirkfläche ergibt sich aus der Stufe von dem Abschnitt (44) mit dem kleineren Durchmesser zum Abschnitt (39) mit dem größeren Durchmesser des Ventilkolbens (39, 44) hin.

Die Wirkflächen (38, 45) am Ventilkolben (39, 44) und die Feder (47) sind so ausgelegt, dass bei Beaufschlagung der Steuerkammer (37) mit dem Druck aus der Druckmittelkammer (22) des Betriebsbremszylinders (2) die vom Druck auf die erste Wirkfläche (38) des Ventilkolbens (39, 44) in Schließrichtung des ersten Ventils (39, 44, 49, 50, 40, 34, 14, 15, 37, 47, 48) ausgeübte Kraft größer ist als die dieser Kraft entgegengerichtet auf den Ventilkolben (39, 44) in Öffnungsrichtung des ersten Ventils (39, 44, 49, 50, 40, 34, 14, 15, 37, 47, 48) ausgeübte Kraft der Feder (47) und der Kraft des vom Druck im Raum (48) auf die zweite Wirkfläche (45) und vom Druck in der Arbeitskammer (49) auf die dritte Wirkfläche in Öffnungsrichtung des ersten Ventils (39, 44, 49, 50, 40, 34, 14, 15, 37, 47, 48) ausgeübte Kraft.

Der Querschnitt des Federdrahtes der Feder (47) entspricht vorteilhafter Weise der Stärke der die Ausnehmung (43) im Ventilkolben (39, 44) begrenzenden Wand des Ventilkolbens (39, 44).

Der Ventilkolben (39, 44) mit dem Dichtkörper (40) bildet zusammen mit dem Ventilsitz (50), dem ersten Arbeitsanschluss (14), dem zweiten Arbeitsanschluss (34) und dem Steueranschluss (15) sowie der Steuerkammer (37), der Arbeitskammer (49), der Feder (47) und dem Raum (48) das als Beatmungsventil der Beatmungseinrichtung für die Federkammer (9) des Federspeicherbremszylinders (1) dienende erste Ventil (39, 44, 49, 50, 40, 34, 14, 15, 37, 47, 48).

Das die Kolbenstange (5) des Federspeicherbremszylinders (1) führende Dichtelement (13, 52) weist auf seiner der Kolbenstange (5) zugewandten Seite eine Ausnehmung (51) auf, in welcher der erste Arbeitsanschluss (14) und der Steueranschluss (15) des ersten Ventils (39, 44, 50, 40, 34, 14, 15, 37, 47, 48) liegen, wenn diese vom Dichtelement (13, 52) überdeckt werden. Der Endbereich des Dichtelementes (13, 52), welcher der Druckmittelkammer (22) des Betriebsbremszylinders (2) zugewandt ist, ist als Dichtlippe (52) ausgebildet, welche die Kolbenstange (5) ringförmig umschließt und dichtend an der Kolbenstange (5) anliegt. Die Dichtlippe (52) bildet eine Steuerkante, die mit dem ersten Arbeitsanschluss (14) und dem Steueranschluss (15) zusammenwirkt.

Die als erster Arbeitsanschluss (14) des ersten Ventils (39, 44, 49, 50, 40, 34, 14, 15, 37, 47, 48) dienende Bohrung in der Kolbenstange (5) hat zusätzlich die Funktion einer Steueröffnung für ein als Schieberventil ausgebildetes zweites Ventil (5, 14, 13, 52) und die als Steueranschluss (15) des ersten Ventils (39, 44, 49, 50, 40, 34, 14, 15, 37, 47, 48) dienende Bohrung in der Kolbenstange (5) hat zusätzlich die Funktion einer Steueröffnung für ein als Schieberventil ausgebildetes drittes Ventil (5, 15, 13, 52) der Beatmungseinrichtung für die Federkammer (9) des Federspeicherbremszylinders (1). Das zweite Ventil (5, 14, 13, 52) dient als Absperrventil, über welches die Arbeitskammer (49) in Abhängigkeit von der Position der Kolbenstange (5) des Federspeicherbremszylinders (1) mit der Druckmittelkammer (22) des Betriebsbremszylinders (2) verbindbar oder gegen diese absperrbar ist, und das dritte Ventil (5, 15, 13, 52) hat die Funktion eines Vorsteuerventils, über welches die Steuerkammer (37) in Abhängigkeit von der Position der Kolbenstange (5) des Federspeicherbremszylinders (1) mit der Druckmittelkammer (22) des Betriebsbremszylinders (2) verbindbar oder gegen diese absperrbar ist. Die Dichtlippe (52) des Dichtelementes (13, 52) ist so geformt, dass das zweite Ventil (5, 14, 13, 52) und auch das dritte Ventil (5, 15, 13, 52) in seiner Schließstellung die Verbindung zwischen der Druckmittelkammer (22) des Betriebsbremszylinders (2) und der Arbeitskammer (49) bzw. der Steuerkammer (37) des ersten Ventils (39, 44, 49, 50, 40, 34, 14, 15, 37, 47, 48) nur in Richtung auf die Arbeitskammer (49) bzw. in Richtung auf die Steuerkammer (37) zu absperrt.

Der erste Arbeitsanschluss (14) und der Steueranschluss (15) sind so in der Wand der Kolbenstange (5) und so zu dem ringförmigen Dichtelement (13, 52) und der Druckmittelkammer (22) des Betriebsbremszylinders (2) angeordnet, dass sie von dem Dichtelement (13, 52) überdeckt sind, wenn der Kolben (7) des Federspeicherbremszylinders (1) sich in seiner linken Endlage befindet, in welcher er die Feder (12) gespannt hält (Bremslösestellung).

Der erste Arbeitsanschluss (14) und der Steueranschluss (15) sind so zueinander und so zu der Druckmittelkammer (22) des Betriebsbremszylinders (1) angeordnet, dass, ausgehend von der Druckmittelkammer (22) des Betriebsbremszylinders (2), der Steueranschluss (15) näher zur Druckmittelkammer (22) hin gelegen ist als der erste Arbeitsanschluss (14). Durch diese Anordnung des ersten Arbeitsanschlusses (14) und des Steueranschlusses (15) wird erreicht, dass bei einem Hub des Kolbens (7) des Federspeicherbremszylinders (1) in Bremsbetätigungsrichtung (nach rechts, in Richtung auf die Wand (30) des Federspeicherbremszylinders (1) zu) zuerst das als Vorsteuerventil dienende dritte Ventil (5, 15, 13, 52) in seine die Druckmittelkammer (22) des Betriebsbremszylinders (2) mit der Steuerkammer (37) des ersten Ventils (39, 44, 49, 50, 40, 34, 14, 15, 37, 47, 48) verbindende Offenstellung und dann das als Absperrventil dienende zweite Ventil (5, 14, 13, 52) in seine die Druckmittelkammer (22) des Betriebsbremszylinders (2) mit der Arbeitskammer (49) des ersten Ventils (39, 44, 49, 50, 40, 34, 14, 15, 37, 47, 48) verbindende Offenstellung gebracht wird.

Durch diese Ausbildung des Beatmungsventils als vorgesteuertes Ventil ist gewährleistet, dass bei druckbeaufschlagter Druckmittelkammer (22) des Betriebsbremszylinders (2) und gleichzeitiger Betätigung des Kolbens (7) des Federspeicherbremszylinders (1) in Bremsbetätigungsrichtung die Federkammer (9) des Federspeicherbremszylinders (1) nicht mit dem Druck in der Druckmittelkammer (22) des Betriebsbremszylinders (2) beaufschlagt wird.

Bei einem Hub des Kolbens (7) des Federspeicherbremszylinders (1) in Bremslöserichtung (nach links, in Richtung von der Wand (30) weg) wird zuerst das zweite Ventil (5, 14, 13, 52) und dann das dritte Ventil (5, 15, 13, 52) in seine Schließstellung gebracht.

Das als Beatmungsventil dienende erste Ventil (39, 44, 49, 50, 40, 34, 14, 15, 37, 47, 48), das als Absperrventil dienenden zweite Ventil (5, 14, 13, 52) und das als Vorsteuerventil dienende dritte Ventil (5, 15, 13, 52) bilden zusammen eine vorgesteuerte Ventileinrichtung (39, 44, 49, 50, 40, 34, 14, 15, 37, 47, 48, 5, 13, 52).

Es ist natürlich auch möglich, das als Beatmungsventil dienende erste Ventil als Schieberventil auszubilden.

Durch unterschiedliche Flächenkombinationen am Ventilkolben (39, 44), welche durch Ändern der Durchmessertoleranzen des Ventilkolbens (39, 44) erreicht werden, und durch Verwendung unterschiedlicher Federn lässt sich auf einfache Art und Weise die für eine Betätigung des ersten Ventils (39, 44, 49, 50, 40, 34, 14, 15, 37, 47, 48) erforderliche Betätigungskraft verändern.

Der zum Verbinden der beiden Arbeitsanschlüsse (14 und 34) dienende Durchlass (42, 43) im Ventilkolben (39, 44) kann auch in der Weise gebildet werden, dass am Ventilkolben (39, 44) stegartige Vorsprünge angeordnet werden, die an die Aufnahme (41) für den Dichtkörper (40) angeformt sind und sich in Richtung der Längsachse des Ventilkolbens (39, 44) verlaufend in Richtung auf den als Federraum dienenden Raum (48) zu erstrecken, wobei an die freien Enden der Vorsprünge ein ringförmiger Körper angeformt ist. Die Vorsprünge und der ringförmige Körper dienen dann gleichzeitig zur Führung des Ventilkolbens (39, 44) in dem den kleineren Durchmesser aufweisenden Teilbereich (46) der abgestuften Bohrung (35, 46).

Das auch als Anschlag für den Ventilkolben (39, 44) dienende Verschlussteil (36) ist in die Bohrung (35, 46) z.B. eingeschraubt, eingepresst oder eingeklebt. Wenn das Verschlussteil (36) eingepresst oder eingeschraubt ist, kann der vom Verschlussteil (36) gebildete Anschlag für den Ventilkolben (39, 44) verstellt und somit der Durchlassquerschnitt für das erste Ventil verändert werden.

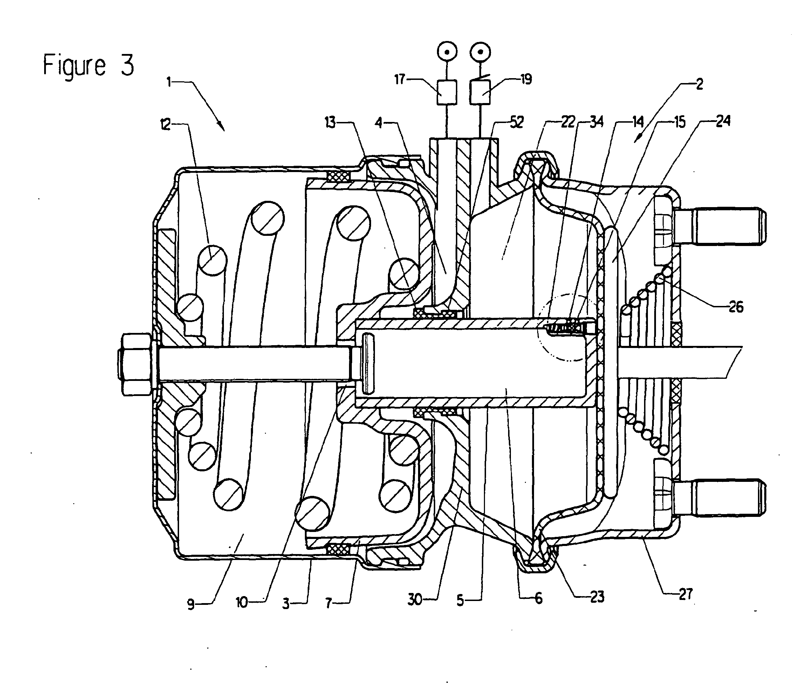

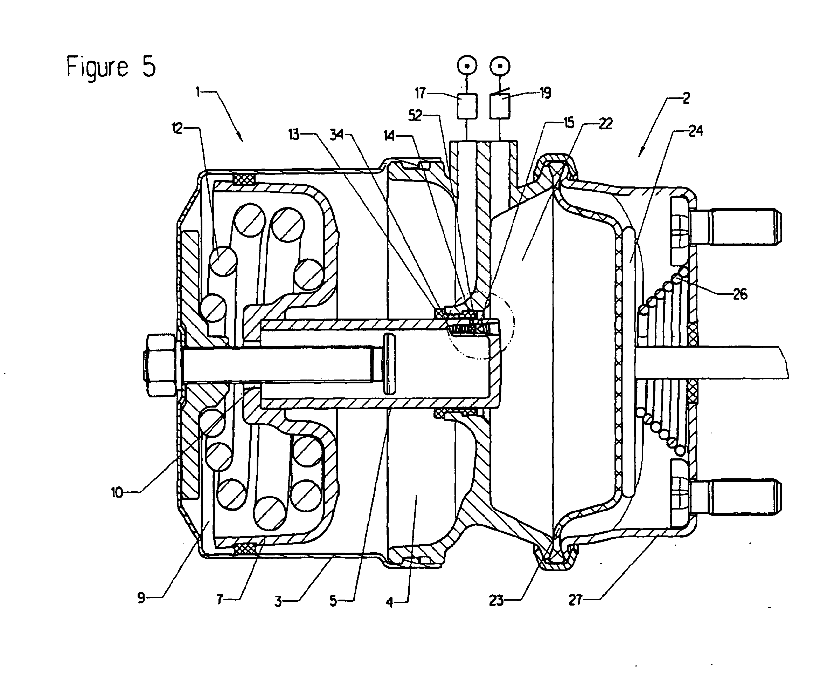

Die in den Figuren 3 und 5 gezeigten kombinierten Federspeicher- und Betriebsbremszylinder werden nicht näher beschrieben, da sie in ihrem Aufbau dem in Fig. 1 gezeigten kombinierten Federspeicher- und Betriebsbremszylinder entsprechen. Den in Fig. 1 gezeigten Bauteilen gleiche Bauteile sind mit gleichen Bezugsziffern versehen. Diese Figuren dienen lediglich zum besseren Verständnis der Funktion der erfindungsgemäßen Beatmungseinrichtung.

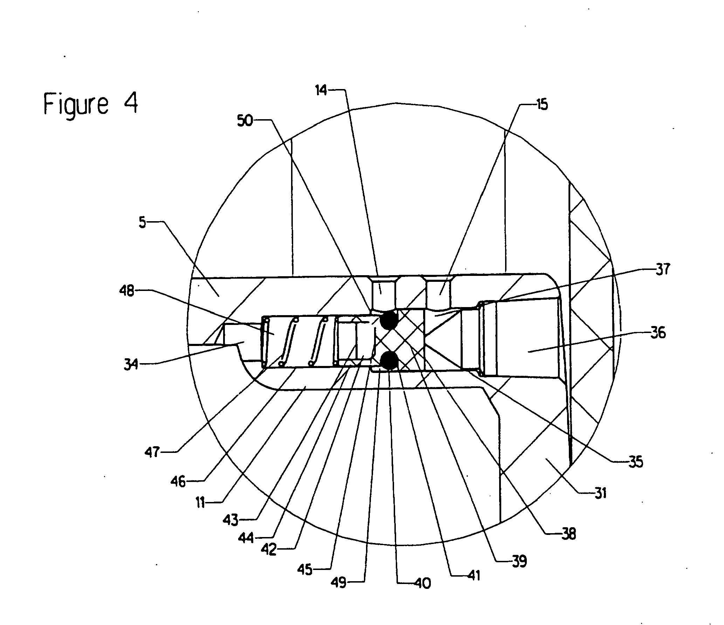

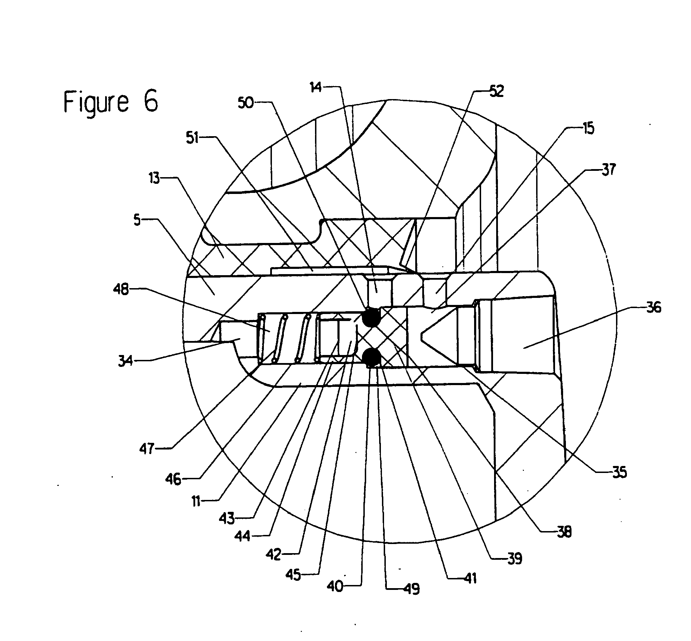

Ebenso werden die in den Figuren 4 und 6 gezeigten Ventile - Beatmungsventil (39, 44, 49, 50, 40, 34, 14, 15, 37, 47, 48), Absperrventil (5, 14, 13, 52) und Vorsteuerventil (5, 15, 13, 52) - des kombinierten Federspeicher- und Betriebsbremszylinders nicht näher beschrieben, da diese den in den Figuren 2 und 2a gezeigten Ventilen entsprechen. Den in den Figuren 2 und 2a gezeigten Bauteilen gleiche Bauteile sind mit gleichen Bezugsziffern versehen.

Die Figuren 1, 3 und 5 zeigen den kombinierten Federspeicher- und Betriebsbremszylinder in unterschiedlichen Betriebsstellungen. Die Figuren 2, 2a, 4 und 6 zeigen die als Beatmungseinrichtung für die Federkammer des Federspeicherbremszylinders dienenden Ventile in den Schaltstellungen, die sie bei den unterschiedlichen Betriebsstellungen des Kolbens (7) des kombinierten Federspeicher- und Betriebsbremszylinders eingenommen haben.

Die Funktion der Beatmungseinrichtung wird nachfolgend näher erläutert.

Gemäß Fig. 1 und Fig. 2 befindet der kombinierte Federspeicher- und Betriebsbremszylinder (1 ,2) sich in einer Betriebsstellung, in welcher die Druckmittelkammer (4) des Federspeicherbremszylinders (1) mit Druck beaufschlagt und die Druckmittelkammer (22) des Betriebsbremszylinders (2) entlüftet ist. Die Feder (12) des Federspeicherbremszylinders (1) ist mittels des Kolbens (7), welcher sich in seiner linken Endlage befindet, gespannt. In dieser Position des Kolbens (7) werden der erste Arbeitsanschluss (14) und der Steueranschluss (15) des ersten Ventils (39, 44, 49, 50, 40, 34, 14, 15, 37, 47, 48) von dem Dichtelement (13, 52) überdeckt. Das erste Ventil (39, 44, 49, 50, 40, 34, 14, 15, 37, 47, 48) befindet sich in seiner Offenstellung. Das zweite Ventil (5, 14, 13, 52) und das dritte Ventil (5, 15, 13, 52) befinden sich in ihrer Schließstellung, so dass die Steuerkammer (37) und die Arbeitskammer (49) gegen die Druckmittelkammer (22) des Betriebsbremszylinders (2) abgesperrt sind. Die Druckmittelkammer (22) des Betriebsbremszylinders (2) ist somit mittels des zweiten Ventils (5, 14, 13, 52) gegen die Federkammer (9) des Federspeicherbremszylinders (1) abgesperrt (Fig.2).

Wird über das Betriebsbremsventil (19) Druckluft in die Druckmittelkammer (22) des Betriebsbremszylinders (2) eingesteuert, so wird dessen Kolben (23, 24) von dem sich in der Druckmittelkammer (22) aufbauenden Druck in Bremsbetätigungsrichtung, das heißt, gegen die Kraft der Feder (26) in Richtung auf die Federkammer (25) zu, angetrieben. Der Kolben (7) des Federspeicherbremszylinders (1) verbleibt dabei in seiner in Fig. 1 dargestellten Stellung, solange die Druckmittelkammer (4) des Federspeicherbremszylinders (1) nicht entlüftet wird. Das erste Ventil (39, 44, 49, 50, 40, 34, 14, 15, 37, 47, 48) befindet sich in seiner Offenstellung (Grundstellung), in welcher der zweite Arbeitsanschluss (34) über den Raum (48), die Ausnehmung (43) im Ventilkolben (39, 44) und die Durchgangsöffnung (42) in der Wand des Ventilkolbens (39, 44) mit der Arbeitskammer (49) und somit mit dem ersten Arbeitsanschluss (14) verbunden ist. Das zweite Ventil (5, 14, 13, 52) und das dritte Ventil (5, 15, 13, 52) verbleiben in ihrer Schließstellung. Diese Stellung entspricht der in Fig. 2 gezeigten Stellung des ersten Ventils (39, 44, 49, 50, 40, 34, 14, 15, 37, 47, 48), des zweiten Ventils (5, 14, 13, 52) und des dritten Ventils (5, 15, 13, 52).

Wird die Druckmittelkammer (22) des Betriebsbremszylinders (2) wieder entlüftet, kehrt der Kolben (23, 24) des Betriebsbremszylinders (2), bewirkt durch die Kraft der Feder (26), in seine Ausgangsstellung zurück.

Wird, wie in Fig. 3 und Fig. 4 dargestellt, die Druckmittelkammer (4) des Federspeicherbremszylinders (1) über das als Handbremsventil dienende Ventil (17) entlüftet, wird der Kolben (7) des Federspeicherbremszylinders (1) von der sich dabei entspannenden Feder (12) in Bremsbetätigungsrichtung angetrieben. Dabei wird der Kolben (23, 24) des Betriebsbremszylinders (2) mittels der Kolbenstange (5) des Kolbens (7) des Federspeicherbremszylinders (1) in der gleichen Richtung angetrieben. Bei diesem Vorgang überfahren der Steueranschluss (15) und der erste Arbeitsanschluss (14) des ersten Ventils (39, 44, 49, 50, 40, 34, 14, 15, 37, 47, 48) die als Steuerkante dienende Dichtlippe (52) des Dichtelementes (13, 52). Das zweite Ventil (5, 14, 13, 52) und das dritte Ventil (5, 15, 13, 52) gelangen dabei in ihre Offenstellung. Über die Verbindungsleitung (6) in der Kolbenstange (5), das sich bereits in der Offenstellung befindliche erste Ventil (39, 44, 49, 50, 40, 34, 14, 15, 37, 47, 48) und das geöffnete zweite Ventil (5, 14, 13, 52) ist die Federkammer (9) des Federspeicherbremszylinders (1) dann mit der Druckmittelkammer (22) des Betriebsbremszylinders (2) verbunden.

Dadurch, dass der Kolben (7) des Federspeicherbremszylinders (1) sich beim Entlüftungsvorgang der Druckmittelkammer (4) des Federspeicherbremszylinders (1) in Richtung auf die Druckmittelkammer (4) zu bewegt, vergrößert sich das Volumen der Federkammer (9).Durch die dabei auftretende Druckdifferenz zwischen dem Druck in der Druckmittelkammer (22) des Betriebsbremszylinders (2) und dem Unterdruck in der Federkammer (9) des Federspeicherbremszylinders (1) entsteht ein Luftstrom von der Druckmittelkammer (22) des Betriebsbremszylinders (2) zur Federkammer (9) des Federspeicherbremszylinders (1) hin. Dabei gelangt der Luftstrom durch das geöffnete zweite Ventil (5, 14, 13, 52) und den ersten Arbeitsanschluss (14) in die Arbeitskammer (49) des ersten Ventils (39, 44, 49, 50, 40, 14, 15, 37, 47, 48) und von dieser weiter durch die Durchgangsöffnung (42) und die an diese anschließende Ausnehmung (43) im Ventilkolben (39, 44) sowie durch den Raum (48) zu dem an der Stirnseite des ersten Ventils (39, 44, 49, 50, 40, 34, 14, 15, 37, 47, 48) angeordneten zweiten Arbeitsanschluss (34). Das bedeutet, dass der Luftstrom in Richtung quer zur Längsachse des Ventilkolbens (39, 44) in den Ventilkolben (39, 44) eintritt, in diesem im Übergangsbereich von der Durchgangsöffnung (42) zu der Ausnehmung (43) umgelenkt und in Richtung der Längsachse des Ventilkolbens (39, 44) aus diesem austritt. Vom zweiten Arbeitsanschluss (34) gelangt der Luftstrom dann durch den Verbindungskanal (6) in der Kolbenstange (5) und die an diesen anschließende Durchgangsöffnung (10) im Kolben (7) des Federspeicherbremszylinders (1) in die Federkammer (9). Es findet ein Druckausgleich zwischen der Federkammer (9) des Federspeicherbremszylinders (1) und der Druckmittelkammer (22) des Betriebsbremszylinders statt. Ein Druckausgleich in der Druckmittelkammer (22) des Betriebsbremszylinders (2) erfolgt dann über das Fahrzeugbremssystem, z.B. über das Betriebsbremsventil (19) zur Atmosphäre hin.

Wird in die Druckmittelkammer (4) des Federspeicherbremszylinders (1) wieder Druckmittel eingesteuert, bewegt der Kolben (7) sich in Richtung auf die Federkammer (9) zu. Dadurch, dass sich dabei das Volumen der Federkammer (9) verringert, wird die in der Federkammer (9) befindliche Luft über das geöffnete erste Ventil (39, 44, 49, 50, 40, 34, 14, 15, 37, 47, 48) und das geöffnete zweite Ventil (5, 14, 13, 52) in die Druckmittelkammer (22) des Betriebsbremszylinders (2) gedrückt. Ein Druckausgleich in der Druckmittelkammer (22) des Betriebsbremszylinders (2) erfolgt dann wieder über das Fahrzeugbremssystem, z.B. über das Betriebsbremsventil (19) zur Atmosphäre hin.

Erst im letzten Teil des Hubes des Kolbens (7) des Federspeicherbremszylinders (1), wenn der erste Arbeitsanschluss (14) und der Steueranschluss (15) die als Steuerkante dienende Dichtlippe (52) des Dichtelementes (13, 52) überfahren, gelangt zuerst das zweite Ventil (5, 14, 13, 52) und dann das dritte Ventil (5, 15, 13, 52) in seine Schließstellung. Das zweite Ventil (5, 14, 13, 52) sperrt dann die Verbindung zwischen der Druckmittelkammer (22) des Betriebsbremszylinders (2) und der Federkammer (9) des Federspeicherbremszylinders (1) in Richtung auf die Federkammer (9) zu. Der bei der weiteren Bewegung des Kolbens (7) in der gleichen Richtung sich in der Federkammer (9) aufbauende geringe Überdruck baut sich dadurch ab, dass die Luft aus der Federkammer durch das geöffnete erste Ventil (39, 44, 49, 50, 40, 34, 14, 15, 37, 47, 48) in den Raum (51) im Dichtelement (13, 52) einströmt, die Dichtlippe (52) des Dichtelementes (13, 52) von der Kolbenstange (5) abhebt und durch den dabei entstehenden Spalt zwischen Dichtlippe (52) und Kolbenstange (5) zur Druckmittelkammer (22) des Betriebsbremszylinders (2) hin abströmt.

Wird in die Druckmittelkammer (22) des Betriebsbremszylinders (2), bei entlüfteter Druckmittelkammer (4) des Federspeicherbremszylinders (1), über das Betriebsbremsventil (19) Druckluft eingesteuert, beaufschlagt diese auch die Steuerkammer (37) und die Arbeitskammer (49) des ersten Ventils (39, 44, 49, 50, 40, 34, 14, 15, 37, 47, 48). Durch die Kraft des sich dann in der Steuerkammer (37) aufbauenden Druckes wird der Ventilkolben (39, 44) sehr schnell gegen die dieser Kraft entgegengerichtete Kraft der Feder (47) und gegen die Kraft des Druckes in der Arbeitskammer (49) in Richtung auf den Ventilsitz (50) zu so weit verschoben bis er mit seinem Dichtkörper (40) am Ventilsitz (50) zur Anlage kommt. Das erste Ventil (39, 44, 49, 50, 40, 34, 14, 15, 37, 47, 48) ist dann geschlossen und somit die Federkammer (9) des Federspeicherbremszylinders (1) gegen die Druckmittelkammer (22) des Betriebsbremszylinders (2) abgesperrt. Da sich beim Schließvorgang des ersten Ventils (39, 44, 49, 50, 40, 34, 14, 15, 37, 47, 48) der Querschnitt der fensterartigen Durchgangsöffnung (42) in der Wand des Ventilkolbens (39, 44) zunehmend verringert und weil die Durchgangsöffnung (42) vorzugsweise so am Ventilkolben (39, 44) angeordnet ist, dass diese bereits geschlossen ist bevor der Dichtkörper (40) am Ventilsitz (50) zur Anlage kommt, gelangt während des Schließvorganges nur eine vernachlässigbar kleine Menge Luft in die Federkammer (9) des Federspeicherbremszylinders (1).

Wird, wie in Fig. 5 dargestellt, die Druckmittelkammer (4) des Federspeicherbremszylinders (1) über das Handbremsventil (17) mit der Atmosphäre verbunden, während die Druckmittelkammer (22) des Betriebsbremszylinders (2) noch mit Druck beaufschlagt ist, wird der Kolben (7) des Federspeicherbremszylinders (1) durch die Kraft der sich dabei entspannenden Feder (12) in Bremsbetätigungsrichtung angetrieben. Dabei taucht die Kolbenstange (5) des Federspeicherbremszylinders (1) in die Druckmittelkammer (22) des Betriebsbremszylinders (2) ein. Dadurch, dass der Steueranschluss (15) des ersten Ventils (39, 44, 49, 50, 40, 34, 14, 15, 37, 47, 48), gesehen von der Druckmittelkammer (22) des Betriebsbremszylinders (2) aus, vor dem ersten Arbeitsanschluss (14) des ersten Ventils (39, 44, 49, 50, 40, 34, 14, 15, 37, 47, 48) angeordnet ist, überfährt der Steueranschluss (15) die als Steuerkante dienende Dichtlippe (52) des Dichtelementes (13, 52) bereits dann, wenn der erste Arbeitsanschluss (14) noch von dem Dichtelement (13, 52) überdeckt wird. Die Dichtlippe (52) des Dichtelementes (13, 52) befindet sich dann zwischen dem Steueranschluss (15) und dem ersten Arbeitsanschluss (14), wie in Fig. 6 erkennbar ist. Druckluft aus der Druckmittelkammer (22) des Betriebsbremszylinders (2) gelangt dann über den Steueranschluss (15) in die Steuerkammer (37) des ersten Ventils (39, 44, 49, 50, 40, 34, 14, 15, 37, 47, 48).

Ist der Druck in der Steuerkammer (37) so weit angestiegen, dass seine auf die erste Wirkfläche (38) des Ventilkolbens (39, 44) ausgeübte Kraft die dieser Kraft entgegengerichtet auf den Ventilkolben (39, 44) ausgeübte Kraft der Feder (47) überwindet, bewegt der Ventilkolben (39, 44) sich nach links in Richtung auf den Raum (48) des ersten Ventils (39, 44, 49, 50, 40, 34, 14, 15, 37, 47, 48) zu, soweit, bis er mit seinem Dichtkörper (40) am Ventilsitz (50) zur Anlage kommt. Das erste Ventil (39, 44, 49, 50, 40, 34, 14, 15, 37, 47, 48) gelangt dann in seine Schließstellung. Bei der weiteren Bewegung der mit dem Kolben (7) verbundenen Kolbenstange (5) des Federspeicherbremszylinders (1) in Richtung auf die Druckmittelkammer (22) zu überfährt der erste Arbeitsanschluss (14) des ersten Ventils (39, 44, 49, 50, 40, 34, 14, 15, 37, 47, 48) die Dichtlippe (52) des Dichtelementes (13, 52). Der erste Arbeitsanschluss (14) ist dann dem Druck in der Druckmittelkammer (22) des Betriebsbremszylinders (2) ausgesetzt. Da das erste Ventil (39, 44, 49, 50, 40, 34, 14, 15, 37, 47, 48) jedoch vorher in seine Schließstellung gelangt ist, bleibt die Druckmittelkammer (22) des Betriebsbremszylinders (2) gegen die Federkammer (9) des Federspeicherbremszylinders (1) abgesperrt.

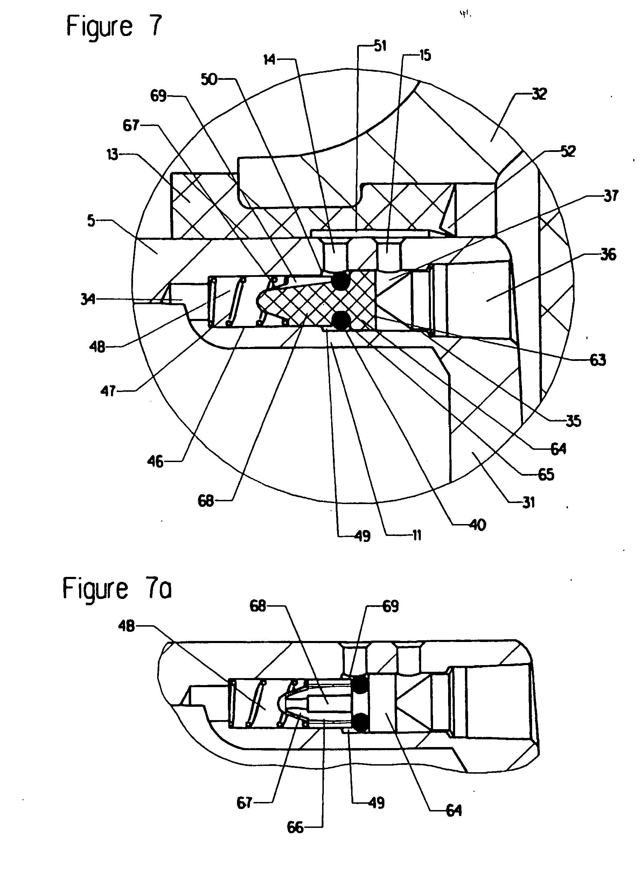

In Fig. 7 (nicht zur Erfindung gehörend) ist ein vergrößerter Ausschnitt des Bereiches der Kolbenstange (5) des Federspeicherbremszylinders (1) dargestellt, in welchem das erste Ventil, das zweite Ventil und das dritte Ventil angeordnet sind. Die aus dem ersten Ventil, dem zweiten Ventil und dem dritten Ventil bestehende Ventileinrichtung unterscheidet sich von der entsprechenden Ventileinrichtung gemäß dem vorstehend beschriebenen Ausführungsbeispiel lediglich dadurch, dass der abgestufte Ventilkolben des ersten Ventils der Ventileinrichtung als Fächerkolben ausgebildet ist.

Bauteile, die den im vorstehend beschriebenen Ausführungsbeispiel gezeigten und beschriebenen Bauteilen gleich sind, sind mit gleichen Bezugszeichen versehen.

Wie auch in dem vorangegangenen Ausführungsbeispiel gezeigt, ist in der mehrfach abgestuften Bohrung (35, 46) im verdickten Teil (11) der Kolbenstange (5) des Federspeicherbremszylinders (1) ein abgestufter Ventilkolben (64, 68) in Richtung der Längsachse der Bohrung (35, 46) bewegbar angeordnet. Der Ventilkolben (64, 68) unterteilt die Bohrung (35, 46) in die Steuerkammer (37), die Arbeitskammer (49) und den Raum (48), an den der zweite Arbeitsanschluss (34) anschließt. Der Raum (48) ist somit praktisch ein Teil des zweiten Arbeitsanschlusses (34). In dem Abschnitt des verdickten Bereiches (11) der Kolbenstange (5), in welchem der den größeren Durchmesser aufweisende Teilbereich (35) der Bohrung (35, 46) gelegen ist, sind quer zur Längsachse des Ventilkolbens (64, 68) verlaufend der erste Arbeitsanschluss (14), der in die Arbeitskammer (49) einmündet, und der Steueranschluss (15), der in die Steuerkammer (37) einmündet, angeordnet. Der zweite Arbeitsanschluss (34) ist an der dem Verschlussteil (36) für die Bohrung (35, 46) abgewandten Stirnseite des ersten Ventils (64, 68, 49, 50, 40, 34, 14, 15, 37, 47, 48) angeordnet.

Der Ventilkolben (64, 68) weist einen ersten Abschnitt (64), der in dem den größeren Durchmesser aufweisenden Teilbereich (35) der Bohrung (35, 46) geführt wird, und einen an diesen anschließenden zweiten Abschnitt (68), der in dem den kleineren Durchmesser aufweisenden Teilbereich (46) der Bohrung (35, 46) geführt wird auf. Im Bereich der Stufe vom ersten Abschnitt (64) zum zweiten Abschnitt (68) des Ventilkolbens (64, 68) hin ist auf dem Umfang des zweiten Abschnitts (68) eine als Aufnahme (65) für den Dichtkörper (40) dienende umlaufende Nut vorgesehen. Im Mantel des zweiten Abschnitts (68) des Ventilkolbens (64, 68) sind mehrere in Richtung der Längsachse des Ventilkolbens (64, 68) verlaufende nutartige Vertiefungen (66, 69) angeordnet. Die nutartigen Vertiefungen (66, 69) beginnen nahe der oder an der Aufnahme (65) für den Dichtkörper (40) des Ventilkolbens (64, 68) und erstrecken sich, in Richtung der Längsachse des Ventilkolbens (64, 68) verlaufend, auf das dem Raum (48) zugewandte Ende des Ventilkolbens (64, 68) zu. Der Boden (67) jeder der nutartigen Vertiefungen (66, 69) bildet eine Schräge, welche von dem dem Raum (48) zugewandten Endbereich des Ventilkolbens (64, 68) ausgehend in Richtung auf die Aufnahme (65) für den Dichtkörper (40) zu ansteigt. Der dem Raum (48) zugewandte Endbereich des Ventilkolbens (64, 68) verjüngt sich kegelförmig in Richtung auf den Raum (48) zu. Von den nutartigen Vertiefungen (66, 69) werden Durchlässe gebildet, über welche der erste Arbeitsanschluss (14) mit dem Raum (48) und somit mit dem zweiten Arbeitsanschluss (34) verbunden ist, wenn das erste Ventil (64, 68, 50, 40, 34, 14, 15, 37, 47, 48) sich in seiner Offenstellung befindet.
Der Ventilkolben (64, 68) wird von der im Raum (48) angeordneten Druckfeder (47) in Öffnungsrichtung des ersten Ventils (64, 68, 49, 50, 40, 34, 14, 15, 37, 47, 48) beaufschlagt und so mit seiner die Steuerkammer (37) begrenzenden Stirnseite (63) an dem auch als Anschlag für den Ventilkolben (64, 68) dienenden Verschlussteil (36) gehalten.

Das die Kolbenstange (5) umschließende ringförmige Dichtelement (13, 52) bildet mit dem ersten Arbeitsanschluss (14) das als Absperrventil dienende zweite Ventil (5, 14, 13, 52) und mit dem Steueranschluss (15) das als Vorsteuerventil dienende dritte Ventil (5, 15, 13, 52).

In Fig. 7a (nicht zur Erfindung gehörend) ist ein Schnitt durch den Ventilkolben (64, 68) gezeigt, wobei der Ventilkolben (64, 68) um 90° um seine Längsachse gedreht ist. In dieser Ansicht sind die im Mantel des Ventilkolbens (64, 68) angeordneten nutartigen Vertiefungen (66, 69) deutlich erkennbar.
Es ist natürlich auch möglich, den zweiten Abschnitt (68) des Ventilkolbens (64, 68) sich in Richtung auf den Raum (48) zu kegelförmig verjüngend auszubilden und auf dem Umfang dieses Abschnitts (68) des Ventilkolbens (64, 68) vorzugsweise im gleichen Abstand zueinander angeordnete rippenartige Vorsprünge vorzusehen. Die rippenartigen Vorsprünge beginnen an der oder nahe der als Aufnahme (65) für den Dichtkörper (40) dienenden umlaufenden Nut und erstrecken sich, in Richtung der Längsachse des Ventilkolbens (64, 68) verlaufend, auf das dem Raum (48) zugewandte Ende des Ventilkolbens (64, 68) zu. Jeder der rippenartigen Vorsprünge ist so ausgebildet und so bemessen, dass seine der kegelförmigen Basis des zweiten Abschnitts des Ventilkolbens abgewandte Seite parallel zu der die abgestufte Bohrung (35, 46) begrenzenden Wand verläuft. Die rippenartigen Vorsprünge dienen dann gleichzeitig zur Führung des den kleineren Durchmesser aufweisenden Abschnitts (68) des Ventilkolbens (64, 68) in dem den kleineren Durchmesser aufweisenden Teilbereich (46) der Bohrung (35, 46). Von den einander zugewandten Seiten der rippenartigen Vorsprünge und der Basis des zweiten Abschnitts (68) des Ventilkolbens (64, 68) werden dann die Durchlässe des Ventilkolbens gebildet, über welche bei geöffnetem ersten Ventil (64, 68, 49, 50, 40, 34, 14, 15, 37, 47, 48) der erste Arbeitsanschluss (14) mit dem zweiten Arbeitsanschluss (34) verbunden ist.

Der Ventilkolben kann, wie vorstehend beschrieben, mehrere Durchlässe aufweisen. Bei entsprechend großer Dimensionierung eines Durchlasses ist es aber auch möglich, den Ventilkolben mit nur einem Durchlass zu versehen.

Die Funktion des mit einem derart ausgebildeten Ventilkolben ausgestatteten Beatmungsventils ist die gleiche, wie die des in dem vorangegangenen Ausführungsbeispiel beschriebenen Beatmungsventils, so dass auf eine Wiederholung der Beschreibung verzichtet werden kann.

Wenn das erste Ventil als reines Schieberventil ausgebildet ist, können die auf dem zweiten Abschnitt (68) des Ventilkolbens (64, 68) angeordneten rippenartigen Vorsprünge oder die im Mantel des zweiten Abschnitts (68) des Ventilkolbens (64, 68) angeordneten nutartigen Vertiefung (66, 69) an der Steuerkante im Übergangsbereich vom ersten Abschnitt (64) zum zweiten Abschnitt (68) des Ventilkolbens (64, 68) beginnen. Der die rippenartigen Vorsprünge oder die nutartigen Vertiefungen aufweisende zweite Abschnitt (68) und der an diesen anschließende erste Abschnitt (64) des Ventilkolbens (64, 68) haben dann gleiche Durchmesser. Als Arbeitskammer kann dann der in die Bohrung (35, 46) zur Aufnahme des Ventilkolbens einmündende Endbereich des Arbeitsanschlusses (14) oder bei Anordnung eines Ventilkolbens mit mehreren Durchlässen eine Ringkammer im Mantel des Ventilkolbens bzw. eine Ringkammer in der die Bohrung (35, 46) begrenzenden Wand dienen.

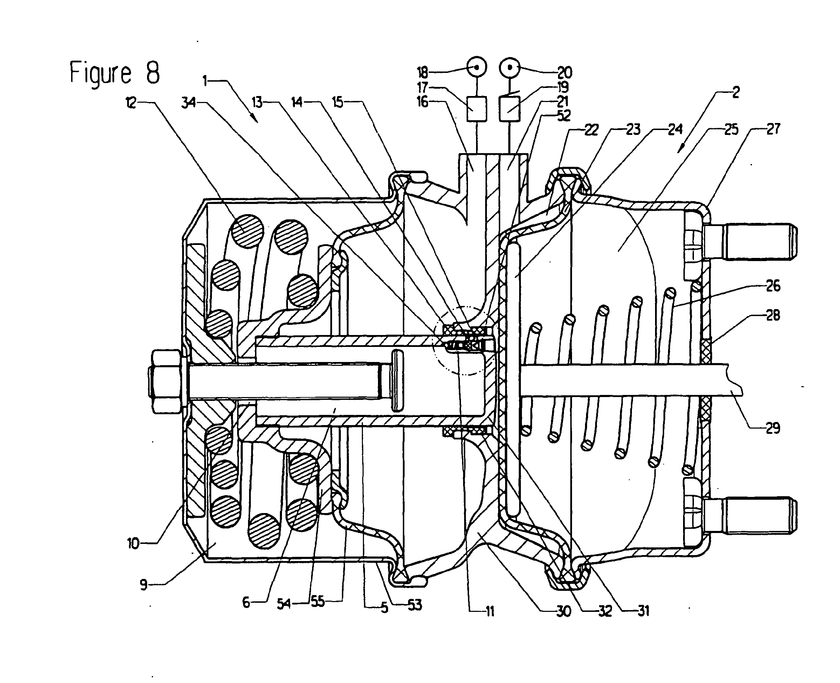

In Fig. 8 ist ein kombinierter Federspeicher- und Betriebsbremszylinder dargestellt, der ebenfalls die vorstehend beschriebene Beatmungseinrichtung enthält. Dieser kombinierte Federspeicher- und Betriebsbremszylinder unterscheidet sich von dem vorstehend beschriebenen Federspeicher- und Betriebsbremszylinder lediglich dadurch, dass der Kolben des Federspeicherbremszylinders sich aus einer ringförmigen Membran (55) und einem Trägerteil (54) aus einem starren Material, wie z.B. Stahlblech, zusammensetzt. Die Membran (55) ist mit ihrem inneren Randbereich in den äußeren Randbereich des Trägerteiles (54) und mit ihrem äußeren Randbereich zwischen der Wand (30) und dem Deckel (53) des Federspeicherbremszylinders (1) eingespannt. Derartige kombinierte Federspeicher- und Betriebsbremszylinder sind auch unter der Bezeichnung Doppelmembranzylinder bekannt. Die Bauteile dieses kombinierten Federspeicher- und Betriebsbremszylinders und die Bauteile der Beatmungseinrichtung, welche den Bauteilen der vorstehend beschriebenen Federspeicher- und Betriebsbremszylinder und den Bauteilen der vorstehend beschriebenen Beatmungseinrichtung gleich sind, sind mit gleichen Bezugsziffern versehen, so dass hier auf diese Bauteile nicht mehr eingegangen wird.

Der Ventilkolben (39, 44, 64, 68) des als Beatmungsventil dienenden ersten Ventils (39, 44, 49, 64, 68, 50, 40, 34, 24, 25, 37, 47, 48) kann aus Metall, Kunststoff (auch verstärkt), Hartgummi oder einem anderen geeigneten Werkstoff hergestellt werden.

Unter einem bewegbaren Ventilkolben ist im Zusammenhang mit der Erfindung das bewegbare Teil eines Ventils zu verstehen, welches mit einer Steueröffnung (Schieberventil) oder einem Ventilsitz (Sitzventil) zusammen das Ventil bildet oder welches als Träger für den Dichtkörper eines Ventils dient (z.B. Ventilkolben, Steuerkolben).

Der im Ventilkolben angeordnete Durchlass, über welchen bei geöffnetem Ventil der erste Arbeitsanschluss mit dem zweiten Arbeitsanschluss verbunden ist, kann auch als ein schräg zur Längsachse des Ventilkolbens verlaufender Kanal ausgebildet sein, der an der Mantelfläche des Ventilkolbens beginnt und an der Stirnseite des Ventilkolbens, welche der Steuerkammer abgewandt ist, endet.

Vorteilhaft kann, wie beschrieben, der Durchlass des Ventilkolbens sowohl von einer durch einen Abschnitt des Ventilkolbens hindurchgeführten Durchgangsöffnung, die z.B. auch von wenigstens im Ventilkolben angeordneten Ausnehmungen und einer fensterartigen Durchbrechung, die miteinander verbunden sind, als auch von wenigstens einer in der Mantelfläche dieses Abschnitts des Ventilkolbens angeordneten nutartigen Vertiefung oder von wenigstens einem Kanal, der von auf dem Mantel des besagten Abschnitts des Ventilkolbens angeordneten rippenartigen Vorsprüngen begrenzt wird, gebildet werden.
Ebenso ist es möglich, den Ventilkolben als ein rohrartiges Teil auszubilden, dessen der Steuerkammer zugewandtes Ende verschlossen ist, wobei die Wand des rohrartigen Teiles wenigstens eine Durchbrechung aufweist, die zusammen mit dem Innenraum des rohrartigen Teiles den Durchlass bildet, über welches der erste Arbeitsanschluss und der zweite Arbeitsanschluss des Ventils bei geöffnetem Ventil miteinander verbunden sind.

Die den zweiten Arbeitsanschluss des Beatmungsventils mit der Federkammer verbindende Verbindungsleitung kann von dem Innenraum der rohrförmigen Kolbenstange oder, bei einer Kolbenstange aus vollem Material, von einer die Kolbenstange in Richtung ihrer Längsachse wenigstens teilweise durchdringenden Bohrung oder auch von einer Verbindungsleitung gebildet werden, die in oder an der Kolbenstange verlegt ist.

Die Steuerkante für das zweite Ventil und das dritte Ventil braucht nicht von dem auch als Führung für die Kolbenstange des Federspeicherbremszylinders dienenden Dichtelement gebildet zu werden. Es kann auch ein von diesem Dichtelement unabhängiges Dichtelement vorgesehen werden, welches die Funktion einer Steuerkante übernimmt.

Das Gehäuse des Beatmungsventils muss nicht von der Wand der Kolbenstange gebildet werden, wie es in den Ausführungsbeispielen gezeigt ist. Das Beatmungsventil kann selbstverständlich ein eigenes Gehäuse aufweisen, in welchem der Ventilkörper bewegbar angeordnet ist und welches Arbeitsanschlüsse und einen Steueranschluss aufweist. Ein solches eigenständiges Ventil kann dann an der Kolbenstange oder in einer entsprechend ausgebildeten Bohrung oder Ausnehmung in der Kolbenstange oder auch in bzw. an einem mit der Kolbenstange verbundenen Teil angeordnet werden.

Die Anordnung des dritten Ventils (5, 15, 13, 52) und somit die Vorsteuerung für das ersten Ventils (39, 44, 49, 50, 34, 14, 15, 37) ist für die Beatmungseinrichtung zwar von Vorteil, jedoch nicht unbedingt erforderlich.

Wird der Steueranschluss (15) so bemessen, dass sein Durchlassquerschnitt wesentlich größer ist als der Durchlassquerschnitt des ersten Arbeitsanschlusses (14) und ist die vom Steuerdruck beaufschlagte Fläche (38, 63) des Ventilkolbens (39, 44, 64, 68) so groß bemessen und die als Rückstellkraft für den Ventilkolben (39, 44, 64, 68) dienende Feder (47) so ausgelegt, dass bei Einsteuerung von Druckluft in die Druckmittelkammer (22) des Betriebsbremszylinders (2) ein sehr schnelles Ansprechen des ersten Ventils (39, 44, 49, 50, 40, 34, 14, 15, 37, 47, 48) erreicht wird, so kann bei der Beatmungseinrichtung gegebenenfalls auch auf das zweite Ventil verzichtet werden.

Der kombinierte Federspeicher- und Betriebsbremszylinder kann, wie in den Ausführungsbeispielen dargestellt, eine gemeinsame Wand (30) für den Federspeicherbremszylinder (1) und den Betriebsbremszylinder (2) aufweisen. Es ist jedoch auch möglich, jeden dieser beiden Bremszylinder mit einer eigenen Wand zu versehen und die beiden Bremszylinder zu einer Baueinheit zu verbinden, welche dann den kombinierten Federspeicher- und Betriebsbremszylinder darstellt.

## Patentansprüche

1. Kombinierter Federspeicher- und Betriebsbremszylinder mit einer Beatmungseinrichtung, mit folgenden Merkmalen:
a) der Federspeicherbremszylinder (1) weist einen durch eine Feder (12) betätigbaren Kolben (7) auf, der den Federspeicherbremszylinder (1) in eine Druckmittelkammer (4) und eine die Feder (12) aufnehmende Federkammer (9) aufteilt;
b) der Betriebsbremszylinder (2) weist einen durch Druckmittel gegen die Kraft einer Feder (26) betätigbaren Kolben (23, 24) auf, der den Betriebsbremszylinder (2) in eine Druckmittelkammer (22) und eine die Feder (26) aufnehmende Federkammer (25) aufteilt;
c) am Kolben (7) des Federspeicherbremszylinders (1) ist eine Kolbenstange (5) angeordnet, welche sich durch eine Durchgangsöffnung (32) in einer Wand (30), welche die Druckmittelkammer (4) des Federspeicherbremszylinders (1) von der Druckmittelkammer (22) des Betriebsbremszylinders (2) trennt, hindurch, in Richtung auf die Druckmittelkammer (22) des Betriebsbremszylinders (2) zu erstreckt, wobei die Kolbenstange (5) mittels eines die Kolbenstange (5) ringförmig umschließenden Dichtelementes (13) abgedichtet in der Durchgangsöffnung (32) geführt wird;
d) die Beatmungseinrichtung weist ein in oder an der Kolbenstange (5) des Kolbens (7) des Federspeicherbremszylinders (1) angeordnetes Ventil (39, 44, 49, 50, 40, 34, 14, 15, 37, 47, 48 49) auf, über welches bei Druckentlastung der Druckmittelkammer (22) des Betriebsbremszylinders (2) eine Beatmung der Federkammer (9) des Federspeicherbremszylinders (1) aus der Druckmittelkammer (22) des Betriebsbremszylinders (2) herbeiführbar ist;
e) das Ventil (39, 44, 49, 50, 40, 34, 14, 15, 37, 47, 48, 49) ist so ausgebildet, dass es bei Einsteuerung von Druckmittel in die Druckmittelkammer (22) des Betriebsbremszylinders (2) gegen eine Rückstellkraft von seiner offenen Grundstellung in seine Schließstellung bringbar ist;
f) das Ventil (39, 44, 49, 50, 40, 34, 14, 15, 37, 47, 48, 49) weist einen ersten Arbeitsanschluss (14), einen zweiten Arbeitsanschluss (34), eine Arbeitskammer (49), eine mit der Druckmittelkammer (22) des Betriebsbremszylinders (2) verbundene Steuerkammer (37) und einen bewegbaren Ventilkolben (39, 44) auf;
g) das Ventil (39, 44, 49, 50, 40, 34, 14, 15, 37, 47, 48, 49) ist so ausgebildet, dass bei Beaufschlagung seiner Steuerkammer (37) mit dem in die Druckmittelkammer (22) des Betriebsbremszylinders (2) eingesteuerten Druck der Ventilkolben (39, 44) vom Druck gegen die Rückstellkraft in Schließrichtung des Ventils (39, 44, 49, 50, 40, 34, 14, 15, 37, 47, 48, 49) antreibbar ist;
h) das Ventil (39, 44, 49, 50, 40, 34, 14, 15, 37, 47, 48, 49) weist einen Raum (48)auf, der auf der Seite des Ventilkolbens (39, 44) gelegen ist, welche der Steuerkammer (37) abgewandt ist;
i) der Raum (48) ist mit dem zweiten Arbeitsanschluss (34) verbunden;
**dadurch gekennzeichnet, dass**
j) der Ventilkolben (39, 44) wenigstens einen Durchlass (42, 43) aufweist, über welchen in der Offenstellung des Ventils (39, 44, 49, 50, 40, 34, 14, 15, 37, 47, 48, 49) der erste Arbeitsanschluss (14) mit dem Raum (48) verbunden ist wobei der Durchlass (42, 43) zum Verbinden der beiden Arbeitsanschlüsse (14, 34) miteinander von einer Ausnehmung (43) im Ventilkolben (39, 44), die sich von der der Steuerkammer (37) abgewandten Stirnseite des Ventilkolbens (39, 44) ausgehend in den Ventilkolben (39, 44) hineinerstreckt, und wenigstens einer die Wand des Ventilkolbens (39, 44), welche die Ausnehmung (43) im Ventilkolben (39, 44) begrenzt, durchdringenden Durchgangsöffnung (42) gebildet wird, die mit der Ausnehmung (43) verbunden ist.

2. Kombinierter Federspeicher- und Betriebsbremszylinder mit einer Beatmungseinrichtung, mit folgenden Merkmalen:
a) der Federspeicherbremszylinder (1) weist einen durch eine Feder (12) betätigbaren Kolben (7) auf, der den Federspeicherbremszylinder (1) in eine Druckmittelkammer (4) und eine die Feder(12) aufnehmende Federkammer (9) aufteilt;
b) der Betriebsbremszylinder (2) weist einen durch Druckmittel gegen die Kraft einer Feder (26) betätigbaren Kolben (23, 24) auf, der den Betriebsbremszylinder (2) in eine Druckmittelkammer (22) und eine die Feder (26) aufnehmende Federkammer (25) aufteilt;
c) am Kolben (7) des Federspeicherbremszylinders (1)ist eine Kolbenstange (5) angeordnet, welche sich durch eine Durchgangsöffnung (32) in einer Wand (30), welche die Druckmittelkammer (4) des Federspeicherbremszylinders (1) von der Druckmittelkammer (22) des Betriebsbremszylinders (2) trennt, hindurch, in Richtung auf die Druckmittelkammer (22) des Betriebsbremszylinders (2) zu erstreckt, wobei die Kolbenstange (5) mittels eines die Kolbenstange (5) ringförmig umschließenden Dichtelementes (13) abgedichtet in der Durchgangsöffnung (32) geführt wird;
d) die Beatmungseinrichtung weist ein in oder an der Kolbenstange (5) des Kolbens (7) des Federspeicherbremszylinders (1) angeordnetes erstes Ventil (39, 44, 50, 40, 34, 14, 15, 37, 47, 48, 49) auf, über welches bei Druckentlastung der Druckmittelkammer (4) des Federspeicherbremszylinders (1) eine Beatmung der Federkammer (9) des Federspeicherbremszylinders (1) aus der Druckmittelkammer (22) des Betriebsbremszylinders (2) herbeiführbar ist;
e) das erste Ventil (39, 44, 50, 40, 34, 14, 15, 37, 47, 48, 49) ist so ausgebildet, dass es bei Einsteuerung von Druckmittel in die Druckmittelkammer (22) des Betriebsbremszylinders (2) gegen eine Rückstellkraft von seiner offenen Grundstellung in seine Schließstellung bringbar ist;
f) das erste Ventil (39, 44, 50, 40, 34, 14, 15, 37, 47, 48, 49) weist einen ersten Arbeitsanschluss (14), einen zweiten Arbeitsanschluss (34), eine Arbeitskammer (49), eine mit dem Druck der Druckmittelkammer (22) des Betriebsbremszylinders (2) beaufschlagbare Steuerkammer (37) und einen bewegbaren Ventilkolben (39, 44) auf;
g) das erste Ventil (39, 44, 50, 40, 34, 14, 15, 37, 47, 48, 49) ist so ausgebildet, dass bei Beaufschlagung seiner Steuerkammer (37) mit dem in die Druckmittelkammer (22) des Betriebsbremszylinders (2) eingesteuerten Druck der Ventilkolben (39, 44) vom Druck gegen die Rückstellkraft in Schließrichtung des ersten Ventils (39, 44, 50, 40, 34, 14, 15, 37, 47, 48, 49) antreibbar ist;
h) es ist ein zweites Ventil (5, 14, 13) vorgesehen, mittels welchem die Arbeitskammer (49) des ersten Ventils (39, 44, 50, 40, 34, 14, 15, 37, 47, 48, 49) gegen die Druckmittelkammer (22) des Betriebsbremszyliders (2) absperrbar ist;
i) das zweite Ventil (5, 14, 13) ist so ausgebildet und so angeordnet, dass es sich bei druckbeaufschlagter Druckmittelkammer (4) des Federspeicherbremszylinders (1) in seiner Schließstellung befindet und bei Druckentlastung der Druckmittelkammer (4) des Federspeicherbremszylinders (1) und der **dadurch** bewirkten Bewegung des Kolbens (7) des Federspeicherbremszylinders (1) in Richtung auf die Druckmittelkammer (4) zu in seine Offenstellung gebracht wird;
j) das erste Ventil (39, 44, 50, 40, 34, 14, 15, 34, 37, 47, 48, 49) weist einen Raum (48) auf, der auf der Seite des Ventilkolbens (39, 44) gelegen ist, welche der Steuerkammer (37) abgewandt ist;
k) der Raum (48) ist mit dem zweiten Arbeitsanschluss (34) verbunden;
**dadurch gekennzeichnet, dass**
l) der Ventilkolben (39, 44) weist wenigstens einen Durchlass (42, 43) auf, über welchen in der Offenstellung des ersten Ventils (39, 44, 50, 40, 34, 14, 15, 37, 47, 48, 49) der erste Arbeitsanschluss (14) mit dem Raum (48) verbunden ist, wobei der Durchlass (42, 43) zum Verbinden der beiden Arbeitsanschlüsse (14, 34) miteinander von einer Ausnehmung (43) im Ventilkolben (39, 44), die sich von der der Steuerkammer (37) abgewandten Stirnseite des Ventilkolbens (39, 44) ausgehend in den Ventilkolben (39, 44) hineinstreckt, und wenigstens einer die Wand des Ventilkolbens (39, 44), welche die Ausnehmung (43) im Ventilkolben (39, 44) begrenzt, durchdringenden Durchgangsöffnung (42) gebildet wird, die mit der Ausnehmung (43) verbunden ist;
m) das erste Ventil (39, 44, 50, 40, 34, 14, 15, 37, 47, 48, 49) und das zweite Ventil (5, 14, 13) so ausgebildet und so angeordnet sind, dass bei druckbeaufschlagter Druckmittelkammer (22) des Betriebsbremszylinders (2) und Druckentlastung der Druckmittelkammer (4) des Federspeicherbremszylinders (1) das zweite Ventil (5, 14, 13) erst dann von seiner Schließstellung in seine Offenstellung gelangt, wenn das erste Ventil (39, 44, 64, 49, 50, 40, 34, 14, 15, 37, 47, 48, 49) durch Beaufschlagung seiner Steuerkammer (37) mit dem Druck der Druckmittelkammer (22) des Betriebsbremszylinders (2) in seine Schließstellung gelangt ist.

3. Kombinierter Federspeicher- und Betriebsbremszylinder nach Anspruch 2, **gekennzeichnet durch** die folgenden Merkmale:
a) es ist ein drittes Ventil (5, 15, 13, 52) vorgesehen, mittels welchem die Druckmittelkammer (22) des Betriebsbremszylinders (2) gegen die Steuerkammer (37) des ersten Ventils (39, 44, 50, 40, 34, 14, 15, 37, 47, 48, 49) absperrbar ist;
b) das dritte Ventil (5, 15, 13, 52) befindet sich bei druckbeaufschlagter Druckmittelkammer (4) des Federspeicherbremszylinders (1) in seiner Schließstellung und wird bei Druckentlastung der Druckmittelkammer (4) des Federspeiherbremszylinders (1) und **dadurch** bewirkter Bewegung des Kolbens (7) des Federspeicherbremszylinders (1) in Richtung auf die Druckmittelkammer (4) zu in seine Offenstellung gebracht;
c) das zweite Ventil (5, 14, 13) und das dritte Ventil (5, 15, 13, 52) sind so ausgebildet und so angeordnet, dass das zweite Ventil (5, 14, 13) bei einer Bewegung des Kolbens (7) des Federspeicherbremszylinders (1) in Richtung auf die Druckmittelkammer (4) des Federspeicherbremszylinders (1) zu erst dann in seine Offenstellung gebracht wird, wenn sich das dritte Ventil (5, 15, 13, 52) bereits in seiner Offenstellung befindet und bei einem Hub des Kolbens (7) des Federspeicherbremszylinders (1) in Bremslöserichtung in seine Schließstellung gebracht wird, bevor das dritte Ventil (5, 15, 13, 52) in seine Schließstellung gebracht wird.

4. Kombinierter Federspeicher- und Betriebsbremszylinder nach Anspruch 3, **dadurch gekennzeichnet, dass** das dritte Ventil (5, 15, 13, 52) von dem die Kolbenstange (5) des Federspeicherbremszylinders (1) ringförmig umschließenden Dichtelement (13, 52) und einem Steueranschluss (15) des ersten Ventils (39, 44, 50, 40, 34, 14, 15, 37, 47, 48, 49) gebildet wird.

5. Kombinierter Federspeicher- und Betriebsbremszylinder nach wenigstens einem der vorhergehenden Ansprüche 2 oder 3, **dadurch gekennzeichnet, dass** das zweite Ventil (5, 14, 13) von dem die Kolbenstange (5) des Federspeicherbremszylinders (1) ringförmig umschließenden Dichtelement (13, 52) und dem ersten Arbeitsanschluss (14) des ersten Ventils (39, 44, 50, 40, 34, 14, 15, 37, 47, 48, 49) gebildet wird.

6. Kombinierter Federspeicher- und Betriebsbremszylinder nach wenigstens einem der vorhergehenden Ansprüche, **dadurch gekennzeichnet, dass** in dem Raum (48) eine als Rückstellkraft für den Ventilkolben (39, 44) dienende Feder (47) angeordnet ist, welche den Ventilkolben (39, 44) in Öffnungsrichtung des als Beatmungsventil dienenden Ventils bzw. ersten Ventil (39, 44, 49, 50, 40, 34, 14, 15, 37, 47, 48) beaufschlagt.

7. Kombinierter Federspeicher- und Betriebsbremszylinder nach wenigstens einem der vorhergehenden Ansprüche, **dadurch gekennzeichnet, dass** bei dem als Beatmungsventil dienenden Ventil bzw. ersten Ventil (39, 44, 49, 50, 40, 34, 14, 15, 37, 47, 48) der erste Arbeitsanschluss (14) quer zur Längsachse des Ventils bzw. ersten Ventils verlaufend am Ventil bzw. ersten Ventils (39, 44, 49, 50, 40, 34, 14, 15, 37, 47, 48) und der zweite Arbeitsanschluss (34) an der Stirnseite des Ventils bzw. ersten Ventils (39, 44, 49, 50, 40, 34, 14, 15, 37, 47, 48), welche auf der der Steuerkammer (37) abgewandten Seite des Ventilkolbens (39, 44) des Ventils bzw. ersten Ventils (39, 44, 64, 68, 49, 50, 40, 34, 14, 15, 37, 47, 48) gelegen ist, angeordnet ist.

8. Kombinierter Federspeicher- und Betriebsbremszylinder nach Anspruch 1 oder 2, **gekennzeichnet durch** die folgenden Merkmale:
a) die Ausnehmung (43) ist als Sackbohrung ausgebildet;
b) die Durchgangsöffnung (42) ist als fensterartiger Durchbruch in der die Ausnehmung (43) begrenzenden Wand des Ventilkolbens (39, 44) ausgebildet.

9. Kombinierter Federspeicher- und Betriebsbremszylinder nach wenigstens einem der vorhergehenden Ansprüche, **dadurch gekennzeichnet, dass** das als Beatmungsventil dienende Ventil bzw. erste Ventil (39, 44, 49, 50, 40, 34, 14, 15, 37, 47, 48) als Sitzventil ausgebildet ist.

10. Kombinierter Federspeicher- und Betriebsbremszylinder nach wenigstens einem der Ansprüche 1 bis 10, **dadurch gekennzeichnet, dass** das als Beatmungsventil dienende Ventil bzw. erste Ventil als Schieberventil ausgebildet ist.

11. Kombinierter Federspeicher- und Betriebsbremszylinder nach Anspruch 4 **dadurch gekennzeichnet, dass** der Steueranschluss (15) und der erste Arbeitsanschluss (14) so angeordnet sind, dass, von der Druckmittelkammer (22) des Betriebsbremszylinders (2) aus gesehen, der Steueranschluss (15) vor dem ersten Arbeitsanschluss (14) gelegen ist.

12. Kombinierter Federspeicher- und Betriebsbremszylinder nach wenigstens einem der vorhergehenden Ansprüche 3 bis 5, **dadurch gekennzeichnet, dass** das die Kolbenstange (5) des Federspeicherbremszylinders (1) ringförmig umschließende Dichtelement (13, 52) an seinem der Druckmittelkammer (22) des Betriebsbremszylinders (2) zugewandten Ende eine die Kolbenstange (5) ringförmig umschließende Dichtlippe (52) aufweist, welche als Steuerkante für wenigstens das dritte Ventil (5, 15, 13, 52) dient.

## Claims

1. Combined spring-accumulator and service-brake cylinder having a breather device, with the following features:
a) the spring-accumulator brake cylinder (1) has a piston (7) which is actuable by a spring (12) and which divides the spring-accumulator brake cylinder (1) into a pressure-medium chamber (4) and a spring chamber (9) receiving the spring (12);
b) the service-brake cylinder (2) has a piston (23, 24) which is actuable by pressure medium counter to the force of a spring (26) and which divides the service-brake cylinder (2) into a pressure-medium chamber (22) and a spring chamber (25) receiving the spring (26);
c) arranged on the piston (7) of the spring-accumulator brake cylinder (1) is a piston rod (5) which extends through a passage orifice (32) in a wall (30), which separates the pressure-medium chamber (4) of the spring-accumulator brake cylinder (1) from the pressure-medium chamber (22) of the service-brake cylinder (2), in the direction of the pressure-medium chamber (22) of the service-brake cylinder (2), the piston rod (5) being guided in the passage orifice (32) so as to be sealed off by means of a sealing element (13) annularly surrounding the piston rod (5);
d) the breather device has a valve (39, 44, 49, 50, 40, 34, 14, 15, 37, 47, 48, 49) which is arranged in or on the piston rod (5) of the piston (7) of the spring-accumulator brake cylinder (1) and via which, when the pressure-medium chamber (22) of the service-brake cylinder (2) is relieved of pressure, a breathing of the spring chamber (9) of the spring-accumulator brake cylinder (1) out of the pressure-medium chamber (22) of the service-brake cylinder (2) can be brought about;
e) the valve (39, 44, 49, 50, 40, 34, 14, 15, 37, 47, 48, 49) is designed so that it can be brought from its open basic position into its closing position counter to a restoring force when pressure medium is fed into the pressure-medium chamber (22) of the service-brake cylinder (2);
f) the valve (39, 44, 49, 50, 40, 34, 14, 15, 37, 47, 48, 49) has a first working connection (14), a second working connection (34), a working chamber (49), a control chamber (37) connected to the pressure-medium chamber (22) of the service-brake cylinder (2), and a movable valve piston (39, 44);
g) the valve (39, 44, 49, 50, 40, 34, 14, 15, 37, 47, 48, 49) is designed so that, when its control chamber (37) is acted upon with the pressure fed into the pressure-medium chamber (22) of the service-brake cylinder (2), the valve piston (39, 44) can be driven by the pressure in the closing direction of the valve (39, 44, 49, 50, 40, 34, 14, 15, 37, 47, 48, 49) counter to the restoring force;
h) the valve (39, 44, 49, 50, 40, 34, 14, 15, 37, 47, 48, 49) has a space (48) which is located on that side of the valve piston (39, 44) which faces away from the control chamber (37);
i) the space (48) is connected to the second working connection (34);
**characterized in that**
j) the valve piston (39, 44) has at least one passage (42, 43), via which, in the open position of the valve (39, 44, 49, 50, 40, 34, 14, 15, 37, 47, 48, 49), the first working connection (14) is connected to the space (48), the passage (42, 43) for connecting the two working connections (14, 34) to one another being formed by a recess (43) in the valve piston (39, 44), which recess extends from that end face of the valve piston (39, 44) which faces away from the control chamber (37) into the valve piston (39, 44), and by at least one passage orifice (42) which penetrates through the wall of the valve piston (39, 44), which wall delimits the recess (43) in the valve piston (39, 44), which is connected to the recess (43).

2. Combined spring-accumulator and service-brake cylinder having a breather device, with the following features:
a) the spring-accumulator brake cylinder (1) has a piston (7) which is actuable by a spring (12) and which divides the spring-accumulator brake cylinder (1) into a pressure-medium chamber (4) and a spring chamber (9) receiving the spring (12);
b) the service-brake cylinder (2) has a piston (23, 24) which is actuable by pressure medium counter to the force of a spring (26) and which divides the service-brake cylinder (2) into a pressure-medium chamber (22) and a spring chamber (25) receiving the spring (26);
c) arranged on the piston (7) of the spring-accumulator brake cylinder (1) is a piston rod (5) which extends through a passage orifice (32) in a wall (30), which separates the pressure-medium chamber (4) of the spring-accumulator brake cylinder (1) from the pressure-medium chamber (22) of the service-brake cylinder (2), in the direction of the pressure-medium chamber (22) of the service-brake cylinder (2), the piston rod (5) being guided in the passage orifice (32) so as to be sealed off by means of a sealing element (13) annularly surrounding the piston rod (5);
d) the breather device has a first valve (39, 44, 50, 40, 34, 14, 15, 37, 47, 48, 49) which is arranged in or on the piston rod (5) of the piston (7) of the spring-accumulator brake cylinder (1) and via which, when the pressure-medium chamber (4) of the spring-accumulator brake cylinder (1) is relieved of pressure, a breathing of the spring chamber (9) of the spring-accumulator brake cylinder (1) out of the pressure-medium chamber (22) of the service-brake cylinder (2) can be brought about;
e) the first valve (39, 44, 50, 40, 34, 14, 15, 37, 47, 48, 49) is designed so that it can be brought from its open basic position into its closing position counter to a restoring force when pressure medium is fed into the pressure-medium chamber (22) of the service-brake cylinder (2);
f) the first valve (39, 44, 50, 40, 34, 14, 15, 37, 47, 48, 49) has a first working connection (14), a second working connection (34), a working chamber (49), a control chamber (37) capable of being acted upon by the pressure of the pressure-medium chamber (22) of the service-brake cylinder (2), and a movable valve piston (39, 44);
g) the first valve (39, 44, 50, 40, 34, 14, 15, 37, 47, 48, 49) is designed so that, when its control chamber (37) is acted upon by the pressure fed into the pressure-medium chamber (22) of the service-brake cylinder (2), the valve piston (39, 44) can be driven in the closing direction of the first valve (39, 44, 50, 40, 34, 14, 15, 37, 47, 48, 49) by the pressure counter to the restoring force;
h) a second valve (5, 14, 13) is provided, by means of which the working chamber (49) of the first valve (39, 44, 50, 40, 34, 14, 15, 37, 47, 48, 49) can be shut off with respect to the pressure-medium chamber (22) of the service-brake cylinder (2);
i) the second valve (5, 14, 13) is so designed and so arranged that it is in its closing position when the pressure-medium chamber (4) of the spring-accumulator brake cylinder (1) is acted upon which pressure, and is brought into its open position when the pressure-medium chamber (4) of the spring-accumulator brake cylinder (1) is relieved of pressure and the piston (7) of the spring-accumulator brake cylinder (1) is consequently moved in the direction of the pressure-medium chamber (4);
j) the first valve (39, 44, 50, 40, 34, 14, 15, 34, 37, 47, 48, 49) has a space (48) which is located on that side of the valve piston (39, 44) which faces away from the control chamber (37);
k) the space (48) is connected to the second working connection (34);
**characterized in that**
l) the valve piston (39, 44) has at least one passage (42, 43), via which, in the open position of the first valve (39, 44, 50, 40, 34, 14, 15, 37, 47, 48, 49), the first working connection (14) is connected to the space (48), the passage (42, 43) for connecting the two working connections (14, 34) to one another being formed by a recess (43) in the valve piston (39, 44), which recess extends from that side of the valve piston (39, 44) which faces away from the control chamber (37) into the valve piston (39, 44), and by at least one passage orifice (42) which penetrates through the wall of the valve piston (39, 44), which wall delimits the recess (43) in the valve piston (39, 44), and which is connected to the recess (43);
m) the first valve (39, 44, 50, 40, 34, 14, 15, 37, 47, 48, 49) and the second valve (5, 14, 13) are so designed and so arranged that, when the pressure-medium chamber (22) of the service-brake cylinder (2) is acted upon with pressure and when the pressure-medium chamber (4) of the spring-accumulator brake cylinder (1) is relieved of pressure, the second valve (5, 14, 13) passes from its closing position into its open position only when the first valve (39, 44, 64, 49, 50, 40, 34, 14, 15, 37, 47, 48, 49) has passed into its closing position as a result of the action upon its control chamber (37) of the pressure of the pressure-medium chamber (22) of the service-brake cylinder (2).

3. Combined spring-accumulator and service-brake cylinder according to Claim 2, **characterized by** the following features:
a) a third valve (5, 15, 13, 52) is provided, by means of which the pressure-medium chamber (22) of the service-brake cylinder (2) can be shut off with respect to the control chamber (37) of the first valve (39, 44, 50, 40, 34, 14, 15, 37, 47, 48, 49);
b) the third valve (5, 15, 13, 52) is in its closing position when the pressure-medium chamber (4) of the spring-accumulator brake cylinder (1) is acted upon by pressure and is brought into its open position when the pressure-medium chamber (4) of the spring-accumulator brake cylinder (1) is relieved of pressure and when the piston (7) of the spring-accumulator brake cylinder (1) is consequently moved in the direction of the pressure-medium chamber (4);
c) the second valve (5, 14, 13) and the third valve (5, 15, 13, 52) are so designed and so arranged that, when the piston (7) of the spring-accumulator brake cylinder (1) is moved in the direction of the pressure-medium chamber (4) of the spring-accumulator brake cylinder (1), the second valve (5, 14, 13) is brought into its open position only when the third valve (5, 15, 13, 52) is already in its open position, and, in the event of a stroke of the piston (7) of the spring-accumulator brake cylinder (1) in the brake-releasing direction, is brought into its closing position before the third valve (5, 15, 13, 52) is brought into its closing position.

4. Combined spring-accumulator and service-brake cylinder according to Claim 3, **characterized in that** the third valve (5, 15, 13, 52) is formed by the sealing element (13, 52) annularly surrounding the piston rod (5) of the spring-accumulator brake cylinder (1) and by a control connection (15) of the first valve (39, 44, 50, 40, 34, 14, 15, 37, 47, 48, 49).

5. Combined spring-accumulator and service-brake cylinder according to at least one of the preceding Claims 2 or 3, **characterized in that** the second valve (5, 14, 13) is formed by the sealing element (13, 52) annularly surrounding the piston rod (5) of the spring-accumulator brake cylinder (1) and by the first working connection (14) of the first valve (39, 44, 50, 40, 34, 14, 15, 37, 47, 48, 49).

6. Combined spring-accumulator and service-brake cylinder according to at least one of the preceding claims, **characterized in that** a spring (47) serving as a restoring force for the valve piston (39, 44) is arranged in the space (48) and acts upon the valve piston (39, 44) in the opening direction of the valve or first valve (39, 44, 49, 50, 40, 34, 14, 15, 37, 47, 48) serving as a breather valve.

7. Combined spring-accumulator and service-brake cylinder according to at least one of the preceding claims, **characterized in that**, when the valve or first valve (39, 44, 49, 50, 40, 34, 14, 15, 37, 47, 48) serves as a breather valve, the first working connection (14), running transversely with respect to the longitudinal axis of the valve or first valve, is arranged on the valve or first valve (39, 44, 49, 50, 40, 34, 14, 15, 37, 47, 48), and the second working connection (34) is arranged on that end face of the valve or first valve (39, 44, 49, 50, 40, 34, 14, 15, 37, 47, 48) which is located on that side of the valve piston (39, 44) of the valve or first valve (39, 44, 64, 68, 49, 50, 40, 34, 14, 15, 37, 47, 48) which faces away from the control chamber (37).

8. Combined spring-accumulator and service-brake cylinder according to Claim 1 or 2, **characterized by** the following features:
a) the recess (43) is designed as a blind bore;
b) the passage orifice (42) is designed as a window-like perforation in that wall of the valve piston (39, 44) which delimits the recess (43).

9. Combined spring-accumulator and service-brake cylinder according to at least one of the preceding claims, **characterized in that** the valve or first valve (39, 44, 49, 50, 40, 34, 14, 15, 37, 47, 48) serving as a breather valve is designed as a seat valve.

10. Combined spring-accumulator and service-brake cylinder according to at least one of Claims 1 to 10, **characterized in that** the valve or first valve serving as a breather valve is designed as a slide valve.

11. Combined spring-accumulator and service-brake cylinder according to Claim 4, **characterized in that** the control connection (15) and the first working connection (14) are arranged so that the control connection (15) is located upstream of the first working connection (14), as seen from the pressure-medium chamber (22) of the service-brake cylinder (2).

12. Combined spring-accumulator and service-brake cylinder according to at least one of the preceding Claims 3 to 5, **characterized in that** the sealing element (13, 52) annularly surrounding the piston rod (5) of the spring-accumulator brake cylinder (1) has, at its end facing the pressure-medium chamber (22) of the service-brake cylinder (2), a sealing lip (52) which annularly surrounds the piston rod (5) and which serves as a control edge for at least the third valve (5, 15, 13, 52).

## Revendications

1. Cylindre de frein de service et à accumulateur à ressort combiné avec un dispositif de respiration, comprenant les caractéristiques suivantes :
a) le cylindre de frein à accumulateur à ressort (1) présente un piston (7) pouvant être actionné par un ressort (12), qui divise le cylindre de frein à accumulateur à ressort (1) en une chambre de fluide de pression (4) et une chambre de ressort (9) recevant le ressort (12) ;
b) le cylindre de frein de service (2) présente un piston (23, 24) pouvant être actionné par du fluide de pression à l'encontre de la force d'un ressort (26), qui divise le cylindre de frein de service (2) en une chambre de fluide de pression (22) et une chambre de ressort (25) recevant le ressort (26) ;
c) une tige de piston (5) est disposée sur le piston (7) du cylindre de frein à accumulateur à ressort (1), laquelle s'étend à travers une ouverture de passage (32) dans une paroi (30), qui sépare la chambre de fluide de pression (4) du cylindre de frein à accumulateur à ressort (1) de la chambre de fluide de pression (22) du cylindre de frein de service (2), dans la direction de la chambre de fluide de pression (22) du cylindre de frein de service (2), la tige de piston (5) étant guidée dans l'ouverture de passage (32) de manière étanche au moyen d'un élément d'étanchéité (13) entourant de manière annulaire la tige de piston (5) ;
d) le dispositif de respiration présente une soupape (39, 44, 49, 50, 40, 34, 14, 15, 37, 47, 48, 49) disposée dans ou sur la tige de piston (5) du piston (7) du cylindre de frein à accumulateur à ressort (1), par le biais de laquelle, en cas de détente de pression de la chambre de fluide de pression (22) du cylindre de frein de service (2), une respiration de la chambre de ressort (9) du cylindre de frein à accumulateur à ressort (1) à partir de la chambre de fluide de pression (22) du cylindre de frein de service (2) peut être provoquée ;
e) la soupape (39, 44, 49, 50, 40, 34, 14, 15, 37, 47, 48, 49) est réalisée de telle sorte qu'elle puisse être amenée lors de la commande de fluide de pression dans la chambre de fluide de pression (22) du cylindre de frein de service (2) à l'encontre d'une force de rappel de sa position de base ouverte dans sa position de fermeture ;
f) la soupape (39, 44, 49, 50, 40, 34, 14, 15, 37, 47, 48, 49) présente un premier raccord de travail (14), un deuxième raccord de travail (34), une chambre de travail (49), une chambre de commande (37) connectée à la chambre de fluide de pression (22) du cylindre de frein de service (2) et un piston de soupape mobile (39, 44) ;
g) la soupape (39, 44, 49, 50, 40, 34, 14, 15, 37, 47, 48, 49) est réalisée de telle sorte que lors de la sollicitation de sa chambre de commande (37) avec la pression commandée dans la chambre de fluide de pression (22) du cylindre de frein de service (2), le piston de soupape (39, 44) puisse être entraîné par la pression à l'encontre de la force de rappel dans la direction de fermeture de la soupape (39, 44, 49, 50, 40, 34, 14, 15, 37, 47, 48, 49) ;
h) la soupape (39, 44, 49, 50, 40, 34, 14, 15, 37, 47, 48, 49) présente un espace (48) qui est placé du côté du piston de soupape (39, 44), qui est opposé à la chambre de commande (37) ;
i) l'espace (48) est connecté au deuxième raccord de travail (34) ;
**caractérisé en ce que**
j) le piston de soupape (39, 44) présente au moins un passage (42, 43), par le biais duquel, dans la position d'ouverture de la soupape (39, 44, 49, 50, 40, 34, 14, 15, 37, 47, 48, 49), le premier raccord de travail (14) est connecté à l'espace (48), le passage (42, 43) pour connecter les deux raccords de travail (14, 34) l'un à l'autre étant formé par un évidement (43) dans le piston de soupape (39, 44), qui s'étend depuis le côté frontal du piston de soupape (39, 44) opposé à la chambre de commande (37) jusque dans le piston de soupape (39, 44), et par au moins une ouverture de passage (42) traversant la paroi du piston de soupape (39, 44), qui limite l'évidement (43) dans le piston de soupape (39, 44), laquelle ouverture est connectée à l'évidement (43).

2. Cylindre de frein de service et à accumulateur à ressort combiné avec un dispositif de respiration, comprenant les caractéristiques suivantes :
a) le cylindre de frein à accumulateur à ressort (1) présente un piston (7) pouvant être actionné par un ressort (12), qui divise le cylindre de frein à accumulateur à ressort (1) en une chambre de fluide de pression (4) et une chambre de ressort (9) recevant le ressort (12) ;
b) le cylindre de frein de service (2) présente un piston (23, 24) pouvant être actionné par du fluide de pression à l'encontre de la force d'un ressort (26), qui divise le cylindre de frein de service (2) en une chambre de fluide de pression (22) et une chambre de ressort (25) recevant le ressort (26) ;
c) une tige de piston (5) est disposée sur le piston (7) du cylindre de frein à accumulateur à ressort (1), laquelle s'étend à travers une ouverture de passage (32) dans une paroi (30), qui sépare la chambre de fluide de pression (4) du cylindre de frein à accumulateur à ressort (1) de la chambre de fluide de pression (22) du cylindre de frein de service (2), dans la direction de la chambre de fluide de pression (22) du cylindre de frein de service (2), la tige de piston (5) étant guidée dans l'ouverture de passage (32) de manière étanche au moyen d'un élément d'étanchéité (13) entourant de manière annulaire la tige de piston (5) ;
d) le dispositif de respiration présente une première soupape (39, 44, 50, 40, 34, 14, 15, 37, 47, 48, 49) disposée dans ou sur la tige de piston (5) du piston (7) du cylindre de frein à accumulateur à ressort (1), par le biais de laquelle, en cas de détente de pression de la chambre de fluide de pression (4) du cylindre de frein à accumulateur à ressort (1), une respiration de la chambre de ressort (9) du cylindre de frein à accumulateur à ressort (1) à partir de la chambre de fluide de pression (22) du cylindre de frein de service (2) peut être provoquée ;
e) la première soupape (39, 44, 50, 40, 34, 14, 15, 37, 47, 48, 49) est réalisée de telle sorte qu'elle puisse être amenée lors de la commande de fluide de pression dans la chambre de fluide de pression (22) du cylindre de frein de service (2) à l'encontre d'une force de rappel de sa position de base ouverte dans sa position de fermeture ;
f) la première soupape (39, 44, 50, 40, 34, 14, 15, 37, 47, 48, 49) présente un premier raccord de travail (14), un deuxième raccord de travail (34), une chambre de travail (49), une chambre de commande (37) pouvant être sollicitée avec la pression de la chambre de fluide de pression (22) du cylindre de frein de service (2) et un piston de soupape mobile (39, 44) ;
g) la première soupape (39, 44, 50, 40, 34, 14, 15, 37, 47, 48, 49) est réalisée de telle sorte que lors de la sollicitation de sa chambre de commande (37) avec la pression commandée dans la chambre de fluide de pression (22) du cylindre de frein de service (2), le piston de soupape (39, 44) puisse être entraîné par la pression à l'encontre de la force de rappel dans la direction de fermeture de la première soupape (39, 44, 50, 40, 34, 14, 15, 37, 47, 48, 49) ;
h) il est prévu une deuxième soupape (5, 14, 13), au moyen de laquelle la chambre de travail (49) de la première soupape (39, 44, 50, 40, 34, 14, 15, 37, 47, 48, 49) peut être bloquée contre la chambre de fluide de pression (22) du cylindre de frein de service (2) ;
i) la deuxième soupape (5, 14, 13) est réalisée et disposée de telle sorte qu'elle se trouve dans sa position de fermeture lorsque la chambre de fluide de pression (4) du cylindre de frein à accumulateur à ressort (1) est sollicitée en pression, et qu'elle soit amenée dans sa position d'ouverture lors de la décharge de pression de la chambre de fluide de pression (4) du cylindre de frein à accumulateur à ressort (1) et du mouvement en résultant du piston (7) du cylindre de frein à accumulateur à ressort (1) dans la direction de la chambre de fluide de pression (4) ;
j) la première soupape (39, 44, 50, 40, 34, 14, 15, 34, 37, 47, 48, 49) présente un espace (48) qui est placé du côté du piston de soupape (39, 44), qui est opposé à la chambre de commande (37) ;
k) l'espace (48) est connecté au deuxième raccord de travail (34) ;
**caractérisé en ce que**
l) le piston de soupape (39, 44) présente au moins un passage (42, 43), par le biais duquel, dans la position d'ouverture de la première soupape (39, 44, 50, 40, 34, 14, 15, 37, 47, 48, 49), le premier raccord de travail (14) est connecté à l'espace (48), le passage (42, 43) pour connecter les deux raccords de travail (14, 34) l'un à l'autre étant formé par un évidement (43) dans le piston de soupape (39, 44), qui s'étend depuis le côté frontal du piston de soupape (39, 44) opposé à la chambre de commande (37) jusque dans le piston de soupape (39, 44), et par au moins une ouverture de passage (42) traversant la paroi du piston de soupape (39, 44), qui limite l'évidement (43) dans le piston de soupape (39, 44), laquelle ouverture est connectée à l'évidement (43) ;
m) la première soupape (39, 44, 50, 40, 34, 14, 15, 37, 47, 48, 49) et la deuxième soupape (5, 14, 13) sont réalisées et disposées de telle sorte que lorsque la chambre de fluide de pression (22) du cylindre de frein de service (2) est sollicitée en pression et que la chambre de fluide de pression (4) du cylindre de frein à accumulateur à ressort (1) est déchargée en pression, la deuxième soupape (5, 14, 13) ne parvienne de sa position de fermeture dans sa position d'ouverture, que lorsque la première soupape (39, 44, 64, 49, 50, 40, 34, 14, 15, 37, 47, 48, 49) est parvenue dans sa position de fermeture par sollicitation de sa chambre de commande (37) par la pression de la chambre de fluide de pression (22) du cylindre de frein de service (2).

3. Cylindre de frein de service et à accumulateur à ressort combiné selon la revendication 2,
**caractérisé par** les caractéristiques suivantes :
a) il est prévu une troisième soupape (5, 15, 13, 52), au moyen de laquelle la chambre de fluide de pression (22) du cylindre de frein de service (2) peut être bloquée contre la chambre de commande (37) de la première soupape (39, 44, 50, 40, 34, 14, 15, 37, 47, 48, 49) ;
b) la troisième soupape (5, 15, 13, 52) se trouve dans sa position de fermeture lorsque la chambre de fluide de pression (4) du cylindre de frein à accumulateur à ressort (1) est sollicitée en pression et est amenée dans sa position d'ouverture lors de la décharge de pression de la chambre de fluide de pression (4) du cylindre de frein à accumulateur à ressort (1) et du mouvement en résultant du piston (7) du cylindre de frein à accumulateur à ressort (1) dans la direction de la chambre de fluide de pression (4) ;
c) la deuxième soupape (5, 14, 13) et la troisième soupape (5, 15, 13, 52) sont réalisées et disposées de telle sorte que la deuxième soupape (5, 14, 13), dans le cas d'un déplacement du piston (7) du cylindre de frein à accumulateur à ressort (1) dans la direction de la chambre de fluide de pression (4) du cylindre de frein à accumulateur à ressort (1), ne soit amenée dans sa position d'ouverture, que lorsque la troisième soupape (5, 15, 13, 52) se trouve déjà dans sa position d'ouverture, et soit amenée dans sa position de fermeture dans le cas d'une course du piston (7) du cylindre de frein à accumulateur à ressort (1) dans la direction du relâchement du frein, avant que la troisième soupape (5, 15, 13, 52) ne soit amenée dans sa position de fermeture.

4. Cylindre de frein de service et à accumulateur à ressort combiné selon la revendication 3,
**caractérisé en ce que** la troisième soupape (5, 15, 13, 52) est formée par l'élément d'étanchéité (13, 52) entourant de manière annulaire la tige de piston (5) du cylindre de frein à accumulateur à ressort (1) et par un raccord de commande (15) de la première soupape (39, 44, 50, 40, 34, 14, 15, 37, 47, 48, 49).

5. Cylindre de frein de service et à accumulateur à ressort combiné selon au moins l'une quelconque des revendications précédentes 2 ou 3, **caractérisé en ce que** la deuxième soupape (5, 14, 13) est formée par l'élément d'étanchéité (13, 52) entourant de manière annulaire la tige de piston (5) du cylindre de frein à accumulateur à ressort (1) et par le premier raccord de travail (14) de la première soupape (39, 44, 50, 40, 34, 14, 15, 37, 47, 48, 49).

6. Cylindre de frein de service et à accumulateur à ressort combiné selon au moins l'une quelconque des revendications précédentes, **caractérisé en ce que** dans l'espace (48) est disposé un ressort (47) servant de force de rappel pour le piston de soupape (39, 44), qui sollicite le piston de soupape (39, 44) dans la direction d'ouverture de la soupape servant de soupape de respiration ou première soupape (39, 44, 49, 50, 40, 34, 14, 15, 37, 47, 48).

7. Cylindre de frein de service et à accumulateur à ressort combiné selon au moins l'une quelconque des revendications précédentes, **caractérisé en ce que** dans le cas de la soupape servant de soupape de respiration ou première soupape (39, 44, 49, 50, 40, 34, 14, 15, 37, 47, 48), le premier raccord de travail (14) est disposé, en s'étendant transversalement à l'axe longitudinal de la soupape ou première soupape, sur la soupape ou première soupape (39, 44, 49, 50, 40, 34, 14, 15, 37, 47, 48) et le deuxième raccord de travail (34) est disposé du côté frontal de la soupape ou première soupape (39, 44, 49, 50, 40, 34, 14, 15, 37, 47, 48), qui est situé du côté du piston de soupape (39, 44) de la soupape ou première soupape (39, 44, 64, 68, 49, 50, 40, 34, 14, 15, 37, 47, 48) qui est opposé à la chambre de commande (37).

8. Cylindre de frein de service et à accumulateur à ressort combiné selon la revendication 1 ou 2, **caractérisé par** les caractéristiques suivantes :
a) l'évidement (43) est réalisé sous forme d'alésage borgne ;
b) l'ouverture de passage (42) est réalisée sous forme de perçage en forme de fenêtre dans la paroi du piston de soupape (39, 44) limitant l'évidement (43).

9. Cylindre de frein de service et à accumulateur à ressort combiné selon au moins l'une quelconque des revendications précédentes, **caractérisé en ce que** la soupape servant de soupape de respiration ou première soupape (39, 44, 49, 50, 40, 34, 14, 15, 37, 47, 48) est réalisée sous forme de soupape à siège.

10. Cylindre de frein de service et à accumulateur à ressort combiné selon au moins l'une quelconque des revendications 1 à 10, **caractérisé en ce que** la soupape servant de soupape de respiration ou première soupape est réalisée sous forme de soupape à tiroir.

11. Cylindre de frein de service et à accumulateur à ressort combiné selon la revendication 4, **caractérisé en ce que** le raccord de commande (15) et le premier raccord de travail (14) sont disposés de telle sorte que, vu depuis la chambre de fluide de pression (22) du cylindre de frein de service (2), le raccord de commande (15) soit placé avant le premier raccord de travail (14).

12. Cylindre de frein de service et à accumulateur à ressort combiné selon au moins l'une quelconque des revendications précédentes 3 à 5, **caractérisé en ce que** l'élément d'étanchéité (13, 52) entourant de manière annulaire la tige de piston (5) du cylindre de frein à accumulateur à ressort (1) présente, à son extrémité tournée vers la chambre de fluide de pression (22) du cylindre de frein de service (2) une lèvre d'étanchéité (52) entourant de manière annulaire la tige de piston (5), qui sert d'arête de commande pour au moins la troisième soupape (5, 15, 13, 52).
